# EUROPEAN PATENT APPLICATION

(11) **EP 1 473 345 A1**
(43) Date of publication of application: **03.11.2004**
(21) Application number: 04010005.9
(22) Date of filing: 27.04.2004
(51) Int. Cl.: C09J 7/02

(54) **Sheet for transfer of projected spots of fibers onto adhesive sufaces**

(30) Priority: 30.04.2003 JP 2003125042; 26.02.2004 JP 2004051510
(71) Applicant: NITTO DENKO CORPORATION, Osaka (JP)
(72) Inventor: Sano, Masanori, Ibaraki-shi Osaka (JP)
(74) Representative: Grünecker, Kinkeldey, Stockmair & Schwanhäusser Anwaltssozietät

(57) **Abstract**

The sheet for transfer formation of projected spots of fibers enables transfer formation of projected spots of fibers at least partly in the surface of a pressure-sensitive adhesive layer. Preferably, the projected spots of fibers are raised spots of fibers that are raised from the surface of a pressure-sensitive adhesive layer. At least one surface of the sheet may have a function as a release face relative to the pressure-sensitive adhesive layer that is to receive the projected spots of fibers from the sheet, and the sheet may have the projected spots of fibers that are to be given to the surface of the pressure-sensitive adhesive layer through transfer formation, at least partly on the side of the release face of the sheet. Preferably, the sheet has recesses partly formed in the release face thereof, and has, in the recesses, projected spots of fibers for transfer formation.

## Description

### FIELD OF THE INVENTION

The present invention relates to a sheet for transfer formation of projected spots of fibers, which is used for forming a substrate that has projected spots of fibers in its surface. More precisely, the invention relates to a sheet for transfer formation of projected spots of fibers, which is used for forming a pressure-sensitive adhesive tape or sheet that exhibits good reworkability and repositionability in adhering adherends with it.

### BACKGROUND OF THE INVENTION

When applied to various adherends, pressure-sensitive adhesive tapes or sheets must readily and firmly adhere to predetermined positions of the adherends. For this purpose, pressure-sensitive adhesive tapes or sheets are required to have good reworkability (they can be temporarily fixed on adherends and can be re-attached to them) and good repositionability (they can be re-positioned on adherends). For example, regarding the operation of applying a pressure-sensitive adhesive tape or sheet to a predetermined site, there is mentioned one example of adhering a flooring material to a floor base. In the operation of adhering a flooring material to a floor base, the flooring material must be inserted into a predetermined area on a floor base. For this purpose, the flooring material, after having been inserted into a predetermined area on a floor base, must be moved for a relatively long distance along the floor base. In this operation, when a pressure-sensitive adhesive tape or sheet having a pressure-sensitive adhesive layer of an ordinary pressure-sensitive adhesive is used, then the flooring material could not be moved along the floor base after it has been inserted into a predetermined area on it, because of the tackiness and the initial adhesiveness of the pressure-sensitive adhesive. To solve the problem, various methods have been proposed. One comprises using a pressure-sensitive adhesive tape or sheet of which the adhesive force is temporarily lowered by the use of water or an organic solvent, or comprises disposing water-swollen granules of a water-absorbing polymer in the interface between the surface of a pressure-sensitive adhesive layer and an adherend (see Patent Reference 1); another comprises using a pressure-sensitive adhesive tape or sheet of which the pressure-sensitive adhesive layer is specifically so designed that its surface has an uneven structure to thereby lower the initial adhesive area thereof (see Patent Reference 2); and still another comprises using a pressure-sensitive adhesive tape or sheet of which the pressure-sensitive adhesive layer is spotted with projections of a non-tacky solid substance to thereby control the initial adhesive force thereof (see Patent Reference 3).
[Patent Reference 1] Japanese Patent No. 3296769
[Patent Reference 2] JP-A-2002-121503
[Patent Reference 3] JP-A-7-310057

In the method of disposing water-swollen granules of a water-absorbing polymer in the interface between the surface of a pressure-sensitive adhesive layer and an adherend, for example, as in Japanese Patent No. 3296769, water is used. However, since water essentially retards adhesion, and using it is undesirable in view of the reliability of adhesion.

In the method of using a pressure-sensitive adhesive tape or sheet of which the pressure-sensitive adhesive layer is specifically so designed that its surface has an uneven structure to thereby lower the initial adhesive area thereof, for example, as in JP-A-2002-121503 (The term "JP-A" as used herein means an "unexamined published Japanese patent application"), the surface of the pressure-sensitive adhesive tape or sheet has a pressure-sensitive adhesive layer existing thereon. In the method, therefore, the width of the correctable position from the temporarily-fixed position is limited, and the repositionability of the pressure-sensitive adhesive tape or sheet is unsatisfactory.

In the method of using a pressure-sensitive adhesive tape or sheet of which the pressure-sensitive adhesive layer is spotted with projections of a non-tacky solid substance to thereby control the initial adhesive force thereof, for example, as in JP-A-7-310057, the non-tacky substance is merely attached to the surface of the pressure-sensitive adhesive layer and its structure is not controlled. Therefore, for making the pressure-sensitive adhesive tape or sheet exhibit good repositionability, the amount of the non-tacky substance to be applied thereto inevitably increases, which, however, is undesirable in view of the pressure-sensitive adhesive property of the pressure-sensitive adhesive tape or sheet.

### SUMMARY OF THE INVENTION

Accordingly, an object of the present invention is to provide a sheet for transfer formation of projected spots of fibers, which is used for forming a substrate that has projected spots of fibers in its surface.

Another object of the invention is to provide a sheet for transfer formation of projected spots of fibers, which is used for forming a pressure-sensitive adhesive tape or sheet of good reworkability and repositionability.

Still another object of the invention is to provide a sheet for transfer formation of projected spots of fibers, which is used for forming a pressure-sensitive adhesive tape or sheet useful for flooring material fixation.

The present inventor has assiduously studied to attain the above objects and, as a result, has found that, when specific structure parts of fibers are provided in the surface of the pressure-sensitive adhesive layer of a pressure-sensitive adhesive tape or sheet, then the tape or sheet may be well temporarily fitted to an adherend and can be re-attached to it when it is adhered to a predetermined site of the adherend, and, in addition, it can be readily re-positioned on the adherend. It has further been found that the pressure-sensitive adhesive tape or sheet (that has specific structure parts of fibers in the surface of the pressure-sensitive adhesive layer thereof) can be readily produced when a sheet having a specific structure is used. The present invention has been completed on the basis of these findings.

Specifically, the invention is a sheet for transfer formation of projected spots of fibers, which enables transfer formation of projected spots of fibers at least partly in the surface of a pressure-sensitive adhesive layer.

Preferably, the projected spots of fibers are raised spots of fibers that are raised from the surface of a pressure-sensitive adhesive layer.

Also preferably, the sheet enables transfer formation of projected spots of fibers in the surface of a pressure-sensitive adhesive layer so as to make the surface have a predetermined pattern of spots as a whole thereof. At least one surface of the sheet may have a function as a release face relative to the pressure-sensitive adhesive layer that is to receive the projected spots of fibers from the sheet, and the sheet may have the projected spots of fibers that are to be given to the surface of the pressure-sensitive adhesive layer through transfer formation, at least partly on the side of the release face of the sheet. Preferably, the sheet has recesses partly formed in the release face thereof, and has, in the recesses, projected spots of fibers for transfer formation.

The sheet for transfer formation of projected spots of fibers may have, in the bottom of each recess in the release face thereof, a pressure-sensitive adhesive layer for holding the projected spots of fibers, and the adhesive force of the pressure-sensitive adhesive layer in the recess bottom is lower than that of the pressure-sensitive adhesive layer that is to receive the projected spots of fibers from the sheet through transfer formation. Concretely, the sheet comprises a substrate, a pressure-sensitive adhesive layer for holding the projected spots of fibers, and a holes-having releasable liner, and in this, the projected spots of fibers are formed in the holes of the releasable liner and on the surface of the pressure-sensitive adhesive layer for holding the projected spots of fibers. Another type of the sheet comprises a substrate having an uneven structure, a release layer formed on the projections of the substrate, and a pressure-sensitive adhesive layer formed in the bottom of each recess of the substrate for holding the projected spots of fibers, and in this, the projected spots of fibers are formed in the recesses of the substrate and on the surface of the pressure-sensitive adhesive layer for holding the projected spots of fibers.

The sheet for transfer formation of projected spots of fibers may be wound up into a roll with its release face inside.

Preferably, the pressure-sensitive adhesive layer to receive the projected spots of fibers from the sheet for transfer formation of projected spots of fibers is a pressure-sensitive adhesive layer formed on at least one surface of the support of a pressure-sensitive adhesive tape or sheet.

Also preferably, the pressure-sensitive adhesive tape or sheet that has a pressure-sensitive adhesive layer to receive the projected spots of fibers from the sheet for transfer formation of projected spots of fibers is a double-sided pressure-sensitive adhesive tape or sheet, and at least one pressure-sensitive adhesive surface thereof may receive the projected spots of fibers.

Also preferably, the pressure-sensitive adhesive layer to receive the projected spots of fibers from the sheet for transfer formation of projected spots of fibers is formed of at least one pressure-sensitive adhesive selected from rubber pressure-sensitive adhesives, acrylic pressure-sensitive adhesives, and hot-melt pressure-sensitive adhesives.

The invention also provides a method for producing a pressure-sensitive adhesive tape or sheet, which comprises sticking the sheet for transfer formation of projected spots of fibers of the invention, to the surface of the pressure-sensitive adhesive layer of a pressure-sensitive adhesive tape or sheet, and then peeling the sheet from it to thereby transfer and form the projected spots of fibers at least partly in the surface of the pressure-sensitive adhesive layer.

### BRIEF DESCRIPTION OF THE DRAWINGS

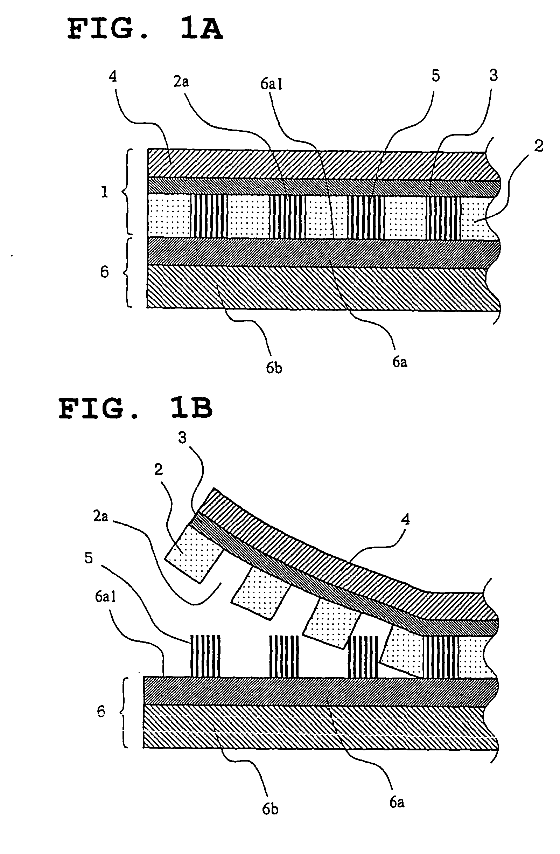

Figs. 1A and 1B are schematic cross-sectional views partly showing one example of a condition of the sheet for transfer formation of projected spots of fibers of the invention, which is stuck to the surface of the pressure-sensitive adhesive layer of a pressure-sensitive adhesive tape or sheet for transferring the projected spots of fibers from the sheet onto the pressure-sensitive adhesive layer. Fig. 1A shows a condition of the sheet stuck to the surface of the pressure-sensitive adhesive layer of a pressure-sensitive adhesive tape or sheet; and Fig. 1B shows a condition of the sheet just peeled off from the surface of the pressure-sensitive adhesive layer of the pressure-sensitive adhesive tape or sheet to transfer the projected spots of fibers from the sheet onto the pressure-sensitive adhesive layer.
Fig. 2 is a schematic plan view of the pressure-sensitive adhesive tape or sheet having received the raised parts of fibers 5 from the sheet of Figs. 1A and 1B, seen on its top.
Fig. 3 is a diagram based on a photograph showing the profile of raised spots of fibers formed on the surface of the pressure-sensitive adhesive layer of a pressure-sensitive adhesive tape or sheet, by the use of a sheet for transfer formation of raised spots of fibers of the invention, and this is seen on the top of the pressure-sensitive adhesive layer.
Fig. 4 is a diagram based on a photograph showing the profile of one raised spot of fibers formed on the surface of the pressure-sensitive adhesive layer of a pressure-sensitive adhesive tape or sheet, by the use of a sheet for transfer formation of raised spots of fibers of the invention, and this is an enlarged view of the essential part of the raised spots of fibers of Fig. 3.
Figs. 5A and 5B are schematic cross-sectional views showing examples of the sheet for transfer formation of projected spots of fibers of the invention.
Fig. 6 is a schematic view showing a perforated releasable liner.

### Description of Reference Numerals

1 Sheet for transfer formation of projected spots of fibers
2 Releasable liner of sheet 1 for transfer formation of projected spots of fibers
2a Hole of releasable liner 2 for sheet for transfer formation of projected spots of fibers
3 Pressure-sensitive adhesive layer of sheet 1 for transfer formation of projected spots of fibers
4 Substrate of sheet 1 for transfer formation of projected spots of fibers
5 Projected spot of fibers transferred onto the pressure-sensitive adhesive layer of pressure-sensitive adhesive tape or sheet
6 Pressure-sensitive adhesive tape or sheet
6a Pressure-sensitive adhesive layer of pressure-sensitive adhesive tape or sheet 6
6a1 Surface of pressure-sensitive adhesive layer 6a for pressure-sensitive adhesive tape or sheet
6b Substrate of pressure-sensitive adhesive tape or sheet 6
7 Sheet for transfer formation of projected spots of fibers
7a Releasable liner of sheet 7 for transfer formation of projected spots of fibers
7b Pressure-sensitive adhesive layer of sheet 7 for transfer formation of projected spots of fibers
7c Substrate of sheet 7 for transfer formation of projected spots of fibers
7d Hole of releasable liner 7a for transfer formation of projected spots of fibers
8 Raised spots of fibers to be transferred onto the pressure-sensitive adhesive layer of pressure-sensitive adhesive tape or sheet
71 Sheet for transfer formation of projected spots of fibers
71a Substrate having uneven structure
71a1 Projection of the substrate 71a having uneven structure for the sheet for transfer formation of projected spots of fibers
71a2 Recess of the substrate 71a having uneven structure for the sheet for transfer formation of projected spots of fibers
71b Release layer
71c Pressure-sensitive adhesive layer for holding projected spots of fibers for transfer formation
81 Raised spot of fibers to be transferred onto the pressure-sensitive adhesive layer of pressure-sensitive adhesive tape or sheet
9 Perforated releasable liner
9a Perforation

### DETAILED DESCRIPTION OF THE INVENTION

The sheet for transfer formation of projected spots of fibers of the invention is specifically so constituted that it enables transfer formation of projected spots of fibers at least partly in the surface of various pressure-sensitive adhesive layers (e.g., pressure-sensitive adhesive layers of pressure-sensitive adhesive tapes or sheets). Specifically, when the sheet for transfer formation of projected spots of fibers of the invention is used, then it enables formation of projected spots of fibers at least partly in the surface of various pressure-sensitive adhesive layers. Concretely, the sheet for transfer formation of projected spots of fibers of the invention is attached to the surface of the pressure-sensitive adhesive layer of a pressure-sensitive adhesive tape or sheet, and the projected spots of fibers of the sheet are transferred onto the pressure-sensitive adhesive layer of the pressure-sensitive adhesive tape or sheet.

### (Projected spots of fibers)

The projected spots of fibers that are to be transferred from the sheet of the invention are not specifically defined provided that they are spotwise projected and are formed of fibers. For example, they include raised spots of fibers that are raised from the surface of the pressure-sensitive adhesive layer of a pressure-sensitive adhesive tape or sheet, and projected spots of fibers where fiber masses are spotwise provided on the surface of the pressure-sensitive adhesive layer thereof. The projected spots of fibers may all have one and the same structure, or may have different structures as combined.

One projected spot of fibers is generally composed of multiple fibers. The number and the density of the fibers that constitute one projected spot are not specifically defined. For example, when the projected spots of fibers for transfer formation are partly transferred and formed in the surface of a pressure-sensitive adhesive layer, then the number and the density of the fibers that constitute one projected spot may be suitably determined depending on the intended reworkability and the repositionability of the pressure-sensitive adhesive layer and on the type of the adherend to which the pressure-sensitive adhesive layer is to be fixed.

Preferably, the projected spots of fibers are raised spots of fibers that are raised from the surface of a pressure-sensitive adhesive layer (especially, the pressure-sensitive adhesive layer of a pressure-sensitive adhesive tape or sheet).

Figs. 1A and 1B are schematic cross-sectional views partly showing one example of a condition of the sheet for transfer formation of projected spots of fibers of the invention, which is stuck to the surface of the pressure-sensitive adhesive layer of a pressure-sensitive adhesive tape or sheet for transferring the projected spots of fibers from the sheet onto the pressure-sensitive adhesive layer. Fig. 1A shows a condition of the sheet stuck to the surface of the pressure-sensitive adhesive layer of a pressure-sensitive adhesive tape or sheet; and Fig. 1B shows a condition of the sheet just peeled off from the surface of the pressure-sensitive adhesive layer of the pressure-sensitive adhesive tape or sheet to transfer the projected spots of fibers from the sheet onto the pressure-sensitive adhesive layer. In Figs. 1A and 1B, 1 is a sheet for transfer formation of projected spots of fibers; 2 is a releasable liner of the sheet 1 for transfer formation of projected spots of fibers (a releasable liner for the sheet for transfer formation of projected spots of fibers); 2a is a hole of the releasable liner 2; 3 is a pressure-sensitive adhesive layer of the sheet 1 for transfer formation of projected spots of fibers (a pressure-sensitive adhesive layer for holding the projected spots of fibers for transfer formation of the sheet); 4 is a substrate of the sheet 1 for transfer formation of projected spots of fibers (a substrate for the sheet for transfer formation of projected spots of fibers); 5 is a projected spot of fibers transferred onto the pressure-sensitive adhesive layer of a pressure-sensitive adhesive tape or sheet; 6 is a pressure-sensitive adhesive tape or sheet; 6a is the pressure-sensitive adhesive layer of the pressure-sensitive adhesive tape or sheet 6 (the pressure-sensitive adhesive layer of a pressure-sensitive adhesive tape or sheet); 6a1 is the surface of the pressure-sensitive adhesive layer 6a for a pressure-sensitive adhesive tape or sheet; 6b is a substrate of the pressure-sensitive adhesive tape or sheet 6 (a substrate of a pressure-sensitive adhesive tape or sheet - this may be hereinafter simply referred to as "substrate").

The sheet 1 for transfer formation of projected spots of fibers comprises a pressure-sensitive adhesive layer 3 for holding the projected spots of fibers for transfer formation formed on one surface of the substrate 4 of sheet for transfer formation of projected spots of fibers, in which the pressure-sensitive adhesive layer 3 is for holding the projected spots of fibers. On the pressure-sensitive adhesive layer 3 for holding the projected spots of fibers for transfer formation, a releasable liner 2 for transfer formation of projected spots of fibers is laminated, and this has holes 2a. On the surface of the pressure-sensitive adhesive layer 3 for holding the projected spots of fibers for transfer formation that is inside the holes of the releasable liner 2 for transfer formation of projected spots of fibers, formed are raised spots 5 of fibers that are to be transferred onto the pressure-sensitive adhesive layer 6a of a pressure-sensitive adhesive tape or sheet. On the other hand, the pressure-sensitive adhesive tape or sheet 6 comprises the pressure-sensitive adhesive layer 6a of a pressure-sensitive adhesive tape or sheet formed on one surface of a substrate 6b of a pressure-sensitive adhesive tape or sheet that serves as a support. As in Fig. 1A, when the sheet 1 for transfer formation of projected spots of fibers is stuck to the pressure-sensitive adhesive tape or sheet 6 (especially when the two are pressed after stuck together), then the raised spots of fibers 5 may be transferred onto the surface 6a1 of the pressure-sensitive adhesive layer 6a of the pressure-sensitive adhesive tape or sheet.

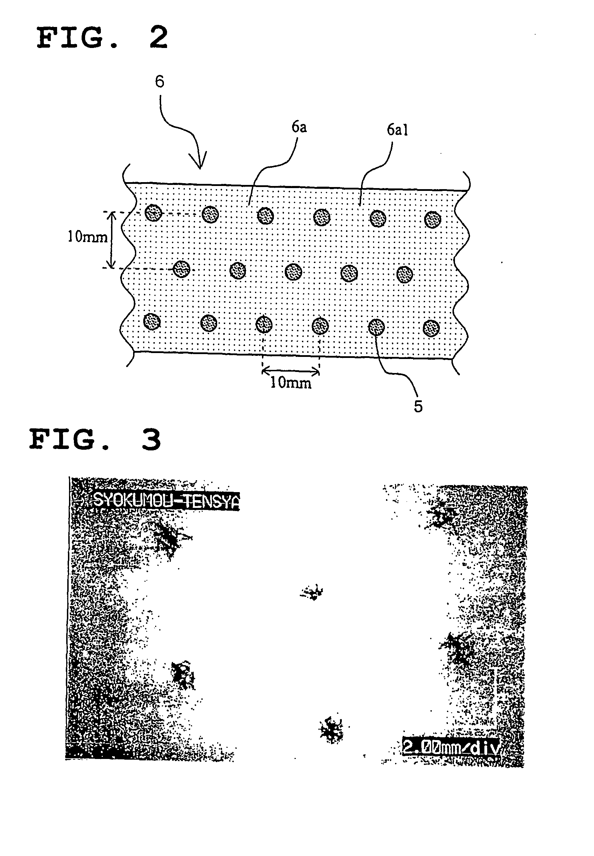

As in Fig. 1B, when the sheet 1 for transfer formation of projected spots of fibers is peeled off from the pressure-sensitive adhesive tape or sheet 6, then the tape or sheet receives the raised spots of fibers 5 having been transferred from the sheet 1 onto the surface 6a1 of the pressure-sensitive adhesive layer 6a of the pressure-sensitive adhesive tape or sheet, as in Fig. 2.

Fig. 2 is a schematic plan view of the pressure-sensitive adhesive tape or sheet having received the raised parts of fibers 5 from the sheet of Figs. 1A and 1B, seen on its top. In Fig. 2, 5, 6, 6a and 6a1 have the same meanings as above.

In Figs. 1A and 1B, the raised spots of fibers 5 are so positioned that they form multiple lines as a whole, as in Fig. 2. The distance between the adjacent lines (the distance between the center parts of the adjacent lines) is 10 mm, and the distance between the raised spots of fibers that are in one line (the distance between the center parts of the adjacent raised spots of fibers) is 10 mm. Regarding the profile of one raised spot of fibers in the surface of the pressure-sensitive adhesive layer of the pressure-sensitive adhesive tape or sheet, the part is almost circular, having a radius of about 0.5 mm (and having an area of about 0.8 mm²). The adjacent lines of the raised spots of fibers are so designed that the raised spots of fibers in one line are formed at the sites each corresponding to the center part of the adjacent raised spots of fibers in the other line.

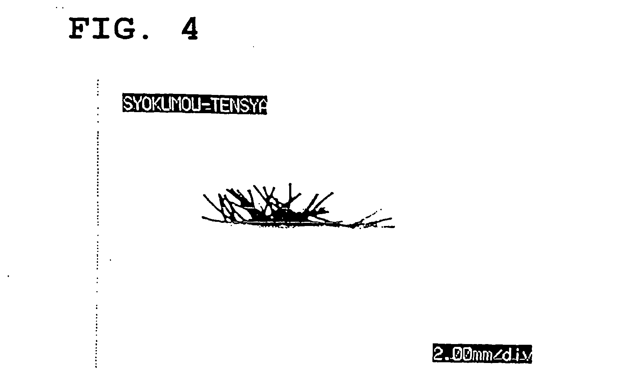

Figs. 3 and 4 are diagrams based on photographs showing the profile of raised spots of fibers formed in the surface of the pressure-sensitive adhesive layer of a pressure-sensitive adhesive tape or sheet, by the use of a sheet for transfer formation of raised spots of fibers of the invention. Fig. 3 is a diagram based on a photograph showing the profile of raised spots of fibers formed on the surface of the pressure-sensitive adhesive layer of a pressure-sensitive adhesive tape or sheet, by the use of a sheet for transfer formation of raised spots of fibers of the invention, and it is seen on the top of the pressure-sensitive adhesive layer of a pressure-sensitive adhesive tape or sheet. Fig. 4 is a diagram based on a photograph showing the profile of one raised spot of fibers formed on the surface of the pressure-sensitive adhesive layer of a pressure-sensitive adhesive tape or sheet, by the use of a sheet for transfer formation of raised spots of fibers of the invention, and it is an enlarged view of the essential part of the raised spots of fibers of Fig. 3.

The diagrams of Figs. 3 and 4 are based on photographs which were taken at a magnification power of from 10 to 175 times, by the use of a digital microscope, VH-6200 (trade name by Keyence).

The projected spots of fibers (in particular, the raised spots of fibers) for transfer formation that are to be transferred onto the surface of a pressure-sensitive adhesive layer may be formed partly or entirely in the release face of the sheet for transfer formation of the projected spots of fibers. When the projected spots of fibers for transfer formation are formed entirely in the release face of the sheet for transfer formation of the projected spots of fibers, then the projected spots of fibers may be transferred onto the entire surface of a pressure-sensitive adhesive layer. On the other hand, when the projected spots of fibers for transfer formation are formed partly in the release face of the sheet for transfer formation of the projected spots of fibers, then the projected spots of fibers may be transferred onto a part of the surface of a pressure-sensitive adhesive layer. When the projected spots of fibers are formed entirely in the surface of a pressure-sensitive adhesive layer, then the surface of the pressure-sensitive adhesive layer is not exposed out. Therefore, the substrate having the pressure-sensitive adhesive layer of this type may serve as a non-tacky substrate (this may be hereinafter referred to as "fibrous face non-tacky substrate"). The opposite face with no fibrous projects of the fibrous face non-tacky substrate may be an pressure-sensitive adhesive face. The substrate of this type may be a fibrous face non-tacky substrate whose back is pressure-sensitive adhesive.

On the other hand, when the projected spots of fibers are formed partly in the surface of a pressure-sensitive adhesive layer, the pressure-sensitive adhesive layer is partly exposed out. Therefore, the substrate having the pressure-sensitive adhesive layer of the type may be a pressure-sensitive adhesive substrate (this may be hereinafter referred to as "fibrous face pressure-sensitive adhesive substrate"). In Figs. 1A and 1B, the raised spots of fibers 5 are so positioned that they form multiple lines as a whole. In that manner, in the fibrous face pressure-sensitive adhesive substrate that is obtained by the use of the sheet for transfer formation of projected spots of fibers of the invention, the projected spots of fibers such as raised spots of fibers may be so positioned that they form multiple lines as a whole.

One preferred constitution of the projected spots of fibers for transfer formation in the invention is described. For example, when the pressure-sensitive adhesive layer to receive the projected spots of fibers is one for a pressure-sensitive adhesive tape or sheet mentioned below and when the projected spots of fibers are partly formed in the surface of the pressure-sensitive adhesive layer, then it is desirable that the pressure-sensitive adhesive tape or sheet can be temporarily adhered to an adherend and then firmly adhered thereto under pressure.

Regarding the structure of the raised spots of fibers of the type, for example, there are mentioned (1) a structure in which one end of each one fiber is adhered and fixed to the surface of a pressure-sensitive adhesive layer while the other end thereof is not fixed (but kept free), and the fibers are raised from the surface of the pressure-sensitive adhesive layer almost in I-shape (as in Figs. 1A and 1B); (2) the center part of each one fiber is adhered and fixed to the surface of a pressure-sensitive adhesive layer while both ends thereof are not fixed (but kept free), and the fibers are raised from the surface of the pressure-sensitive adhesive layer almost in V-shape; (3) both ends of each one fiber are adhered and fixed to the surface of a pressure-sensitive adhesive layer, while the center part thereof is not fixed (but kept free), and the fibers are raised from the surface of the pressure-sensitive adhesive layer almost in reversed U-shape; as well as other structures in which fibers are raised from the surface of a pressure-sensitive adhesive layer almost in any of W-shape, M-shape, N-shape or O-shape; and their combinations. For the structure of the raised spots of fibers, preferred is the above-mentioned structure (1) (in which fibers are raised from the surface of a pressure-sensitive adhesive layer almost in I-shape). Needless-to-say, in the raised spots of fibers, fibers may be raised linearly in I-shape from the surface of the pressure-sensitive adhesive layer for pressure-sensitive adhesive tape or sheet, or may be in any other form of notches, waves or loops to rise as a whole from the surface.

In case where the projected spots of fibers are partly formed in the surface of a pressure-sensitive adhesive layer, they are not specifically defined in point of their overall profile, and their overall profile may be suitably determined, depending on the intended reworkability and the repositionability of the pressure-sensitive adhesive layer and on the type of the adherend to which the pressure-sensitive adhesive layer is to be adhered, and may be designed, for example, to have a predetermined pattern.

When a substrate having a pressure-sensitive adhesive layer with projected spots of fibers transferred onto the surface thereof is produced by the use of the sheet for transfer formation of projected spots of fibers of the invention, and when the surface of the substrate thus produced to have the projected spots of fibers transferred thereonto has pressure-sensitive adhesiveness (that is, when the substrate is a fibrous face pressure-sensitive adhesive substrate), then it is important that the projected spots of fibers are partly formed in the pressure-sensitive adhesive layer of the substrate, as so mentioned hereinabove. In this embodiment, it is desirable that the projected spots of fibers are partly formed in the surface of the pressure-sensitive adhesive layer to form a pattern as a whole thereof. For example, when the projected spots of fibers are formed to have a pattern profile as in Fig. 2 as a whole, or that is, when they are so designed as to form multiple lines as a whole, then the distance between the adjacent lines is not specifically defined, but may be, for example, from 1 to 100 mm (preferably from 3 to 50 mm, more preferably from 5 to 40 mm) or so in view of the pressure-sensitive adhesiveness of the pressure-sensitive adhesive layer. The distance between the adjacent projected spots of fibers in one line is not also specifically defined, but may be, for example, from 1 to 100 mm (preferably from 3 to 50 mm, more preferably from 5 to 40 mm) or so in view of the pressure-sensitive adhesiveness of the pressure-sensitive adhesive layer. The positional relationship of the projected spots of fibers in the adjacent lines is not also specifically defined, and the projected spots may be so positioned that they form a lattice-like pattern as a whole or may be positioned at random as a whole.

When the projected spots of fibers are partly formed in the surface of a pressure-sensitive adhesive layer, then the profile of one projected spot of fibers is not specifically defined. For example, it may be almost circular or almost polygonal, or may have irregular forms. The number of the projected spots of fibers to be transferred onto the surface of the pressure-sensitive adhesive layer is not also specifically defined.

When the projected spots of fibers are partly formed in the surface of a pressure-sensitive adhesive layer, then the overall area of the sites at which the projected spots of fibers are to be formed in the surface of the pressure-sensitive adhesive layer (this corresponds to an area of all the projected spots of fibers) is not also specifically defined. For example, it may be from 0.001 to 20 % (preferably from 0.005 to 15 %, more preferably from 0.01 to 10 %) of the entire surface of the pressure-sensitive adhesive layer in view of the pressure-sensitive adhesiveness of the layer. If the area of all the projected spots of fibers in the surface of the pressure-sensitive adhesive layer is smaller than 0.001 % of the overall area of the layer, then the initial adhesive force of the pressure-sensitive adhesive layer could not be well reduced and therefore the reworkability and the repositionability of the substrate with the pressure-sensitive adhesive layer will be therefore poor. On the other hand, if the area of all the projected spots of fibers in the surface of the pressure-sensitive adhesive layer is larger than 20 % of the overall area of the layer, then the reworkability and the repositionability of the substrate with layer may be good but the adhesive force of the fibrous face pressure-sensitive adhesive substrate to adherends will lower.

The area of each projected spot of fibers is not specifically defined. For example, it may be from 0.1 to 10 mm² (preferably from 0.3 to 5 mm², more preferably from 0.5 to 3 mm²) or so. Not limited to the range, however, the area may be smaller than 0.1 mm² or may be larger than 10 mm².

For example, when multiple projected spots of fibers are transferred and formed in the surface of a pressure-sensitive adhesive layer in such a manner that the area of each projected spot is from 0.1 to 10 mm², then the shortest distance between the adjacent projected spots of fibers may be, for example, from 1 to 100 mm (preferably from 3 to 50 mm, more preferably from 5 to 40 mm) or so.

The area of the projected spots of fibers in the surface of a pressure-sensitive adhesive layer may be the area of the part surrounded by the projected spots of fibers.

The fibers to constitute the projected spots are not specifically defined, and may be any of natural fibers, semi-synthetic fibers, or synthetic fibers. More concretely, the fibers include, for example, cotton fibers, rayon fibers, polyamide fibers [e.g., aliphatic polyamide fibers, aromatic polyamide fibers (aramid fibers)], polyester fibers (e.g., trade name, Tetron), polyacrylonitrile fibers, carbon fibers (carbon-based fibers), acrylic fibers, polyvinyl alcohol fivers (vinylon fibers), polyethylene fibers, polyimide fibers, fluorine-containing fibers. For the fibers for use herein, preferred are cotton fibers, rayon fibers, polyamide fibers, polyester fibers.

One or more different types of fibers may be used herein either singly or as combined.

Short fibers are preferred for use herein. Long fibers are unfavorable since they lower the adhesive force of the pressure-sensitive adhesive face of the substrate having projected spots of the fibers thereon (fibrous face pressure-sensitive adhesive substrate) to adherends. Concretely, it is desirable that the length of the fibers falls between 0.1 and 5 mm (more preferably between 0.3 and 5 mm, even more preferably between 0.3 and 2 mm) or so. However, too short fibers are difficult to produce and are therefore expensive. Therefore, using too short fibers is unfavorable from the point of economical view. When the substrate having the projected spots of fibers is a fibrous face pressure-sensitive adhesive substrate and if the fibers for it are too short, then the pressure to be applied to the substrate for adhering the pressure-sensitive adhesive layer thereof to adherends may be low. However, this is unfavorable since the reworkability and the repositionability of the substrate will be not good in that condition.

The thickness of the fibers is not specifically defined. For example, it may be from 0.1 to 20 deniers (preferably from 0.5 to 15 deniers, more preferably from 1 to 6 deniers). If too thick, the fibers are unfavorable since they are not flexible and therefore require high pressure for adhering the pressure-sensitive adhesive layer with them to adherends. On the other hand, too thin fibers are also unfavorable since they are ineffective for reducing the initial adhesive force of the pressure-sensitive adhesive layer with them to adherends, and the reworkability and the repositionability of the substrate with them will be therefore poor.

### (Sheet for transfer formation of projected spots of fibers)

The sheet for transfer formation of projected spots of fibers is not specifically defined in point of its structure, provided that it is so designed that the projected spots of fibers can be transferred from it onto the surface of a pressure-sensitive adhesive layer when the sheet is stuck thereto. For example, at least one surface of the sheet functions as a release face relative to the pressure-sensitive adhesive layer onto which the projected spots of fibers are transferred from the sheet, and the release face of the sheet has at least partly the projected spots of fibers for transfer formation that are to be transferred onto the surface of a pressure-sensitive adhesive layer.

The structure of the projected spots of fibers for transfer formation of the sheet correspond to the structure of the projected spots of fibers transferred onto the surface of the pressure-sensitive adhesive layer. Needless-to-say, the type, the length and the thickness of the fibers of the projected spots of the sheet are the same as those of the fibers of the projected spots having been transferred onto the surface of the pressure-sensitive adhesive layer. The method forming the projected spots of fibers (especially, the raised spots of fibers) in the sheet for transfer formation thereof is not specifically defined. For it, for example, a flocking technique (especially electrostatic flocking technique) is preferably employed, as described hereinunder. According to the electrostatic flocking method, the sheet may be flocked in any of upward, downward or sideward direction.

The sheet for transfer formation of projected spots of fibers includes two types. (i) One has the projected spots of fibers for transfer formation entirely in one surface thereof; and (ii) the other has the projected spots of fibers for transfer formation partly in one surface thereof.

The sheet for transfer formation of projected spots of fibers is the former sheet (i) that has projected spots of fibers for transfer formation entirely in one surface thereof includes two embodiments. (1a) Both surfaces of the substrate serving as a support are release faces, and projected spots of fibers for transfer formation are formed entirely in at least one release face; and (1b) one surface of the substrate serving as a support is a release face, and projected spots of fibers for transfer formation are formed entirely in the release face. Regarding the constitution of the sheet (i), the sheet (1a) has projected spots of fibers for transfer formation entirely in one or both surfaces thereof. When it has projected spots of fibers for transfer formation only in one surface thereof, then the other surface of the sheet is a release-treated layer surface (a release face). The sheet (1b) has projected spots of fibers for transfer formation entirely only in one surface thereof, and the other surface of the sheet may be the surface of the substrate or may be any other layer (e.g., pressure-sensitive adhesive layer).

On the other hand, the sheet for transfer formation of projected spots of fibers is the latter sheet (ii) that has projected spots of fibers for transfer formation partly in one surface thereof includes two embodiments. (2a) Both surfaces of the substrate serving as a support are release faces, and projected spots of fibers for transfer formation are formed partly in at least one release face; and (2b) one surface of the substrate serving as a support is a release face, and projected spots of fibers for transfer formation are formed partly in the release face. Regarding the constitution of the sheet (ii), the sheet (2a) has projected spots of fibers for transfer formation partly in one or both release faces thereof, and the release face that has projected spots of fibers for transfer formation partly formed therein is partly exposed out, while the other release face that does not have projected spots of fibers for transfer formation therein entirely serves as a release face. The sheet (2b) has projected spots of fibers for transfer formation partly only in one surface thereof, and the other surface of the sheet may be the substrate surface or may be any other layer (e.g., pressure-sensitive adhesive layer).

Preferably, the sheet for transfer formation of projected spots of fibers is so designed that its release face partly has recesses and the recesses have the projected spots of fibers for transfer formation. Also preferably, the bottom of each recess formed in the release face of the sheet has a pressure-sensitive adhesive layer that holds the projected spots of fibers for transfer formation, and the adhesive force of the pressure-sensitive adhesive layer is lower than that of the pressure-sensitive adhesive layer onto which the projected spots of fibers are to be transferred from the sheet. Since the adhesive force of the pressure-sensitive adhesive layer that holds the projected spots of fibers for transfer formation is lower than that of the pressure-sensitive adhesive layer onto which the projected spots of fibers are to be transferred from the sheet, the projected parts of fibers for transfer formation may be readily transferred from the sheet onto various pressure-sensitive adhesive layers.

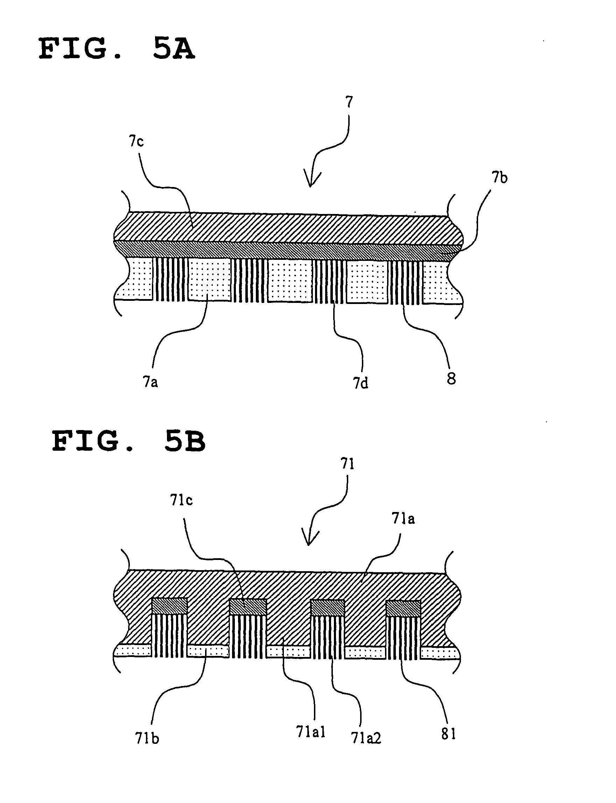

More concretely, the sheet for transfer formation of projected spots of fibers includes two embodiments. (a) One comprises a substrate, a pressure-sensitive adhesive layer for holding projected spots of fibers for transfer formation, and a holes-having releasable liner, in which the projected spots of fibers for transfer formation are formed in the holes of the releasable liner and on the surface of the pressure-sensitive adhesive layer for holding the projected spots of fibers for transfer formation, as in Fig. 1A or Fig. 5A (this may be hereinafter referred to as "sheet (a) for transfer formation of projected spots of fibers"); and (b) another comprises a substrate having an uneven structure, a release-treated layer formed on the projections of the substrate, and a pressure-sensitive adhesive layer formed in the bottom of each recess of the substrate for holding the projected spots of fibers, in which the projected spots of fibers are formed in the recesses of the substrate and on the surface of the pressure-sensitive adhesive layer for holding the projected spots of fibers for transfer formation, as in Fig. 5B (this may be hereinafter referred to as "sheet (b) for transfer formation of projected spots of fibers").

Figs. 5A and 5B are schematic cross-sectional views showing examples of the sheet for transfer formation of projected spots of fibers of the invention. In Fig. 5A, 7 is a sheet for transfer formation of projected spots of fibers [sheet (a) for transfer formation of projected spots of fibers]; 7a is a releasable liner of the sheet 7 for transfer formation of projected spots of fibers (releasable liner for a sheet for transfer formation of projected spots of fibers); 7b is a pressure-sensitive adhesive layer of the sheet 7 for transfer formation of projected spots of fibers (pressure-sensitive adhesive layer for holding projected spots of fibers for transfer formation); 7c is a substrate of the sheet 7 for transfer formation of projected spots of fibers (substrate of a sheet for transfer formation of projected spots of fibers); 7d is a hole of the releasable liner 7a for the sheet for transfer formation of projected spots of fibers; 8 is a projected spot of fibers to be transferred onto a pressure-sensitive adhesive layer. The sheet 7 for transfer formation of projected spots of fibers has the same constitution as that of the sheet 1 for transfer formation of projected spots of fibers of Fig. 1A.

In Fig. 5B, 71 is a sheet for transfer formation of projected spots of fibers [sheet (b) for transfer formation of projected spots of fibers]; 71a is substrate having an uneven structure (an uneven structure-having substrate for a sheet for transfer formation of projected spots of fibers); 71a1 is a projection of the uneven structure-having substrate 71a for a sheet for transfer formation of projected spots of fibers; 71a2 is a recess of the uneven structure-having substrate 71a for a sheet for transfer formation of projected spots of fibers; 71b is a release-treated layer formed on the projection 71a1 of the uneven structure-having substrate 71a for a sheet for transfer formation of projected spots of fibers; 71c is a pressure-sensitive adhesive layer formed in the bottom of each recess 71a2 of the uneven structure-having substrate 71a for a sheet for transfer formation of projected spots of fibers for holding the projected spots of fibers; 81 is a raised spot of fibers to be transferred onto a pressure-sensitive adhesive layer. In the sheet 71 for transfer formation of projected spots of fibers, a release layer 71b is formed on the projections 71a1 of the uneven structure-having substrate 71a for a sheet for transfer formation of projected spots of fibers, a pressure-sensitive adhesive layer 71c for holding projected spots of fibers for transfer formation is formed in the bottom of each recess 71a2, and raised spots of fibers 81 that are to be transferred onto a pressure-sensitive adhesive layer are formed on the surface of the pressure-sensitive adhesive layer 71c for holding projected spots of fibers for transfer formation inside each recess 71a2.

Concretely, the sheet (a) for transfer formation of projected spots of fibers having the above-mentioned constitution (a) comprises a substrate (substrate for sheet for transfer formation of projected spots of fibers), a pressure-sensitive adhesive layer for holding projected spots of fibers for transfer formation, a holes-having releasable liner (releasable liner for sheet for transfer formation of projected spots of fibers), and projected spots of fibers for transfer formation that are formed in the holes of the releasable liner for the sheet for transfer formation of projected spots of fibers and on the surface of the pressure-sensitive adhesive layer for holding the projected spots of fibers for transfer formation, as in Fig. 1A or Fig. 5A. For the substrate for the sheet (a) of the type for transfer formation of projected spots of fibers, usable are any suitable thin leafy bodies, for example, plastic substrates such as plastic films or sheets; metal substrates such as metal foils, metal plates; paper substrates of paper (e.g., woodfree paper, Japanese paper, kraft paper, glassine paper, synthetic paper, top-coated paper); fibrous substrates such as fabrics, nonwoven fabrics, nets; rubber substrates such as rubber sheets; foams such as foamed sheets. The substrate may be single-layered or multi-layered. For example, the substrate for the sheet for transfer formation of projected spots of fibers may have a multi-layered (two or three-layered) structure of a plastic substrate with any other substrate (e.g., paper substrate) fabricated in a mode of lamination or co-extrusion.

For the substrate for sheet for transfer formation of projected spots of fibers, plastic films and sheets are preferred. The material for the plastic films and sheets (plastic material) includes, for example, olefin resins from α-olefin monomer such as polyethylene (PE), polypropylene (PP), ethylene-propylene copolymer, ethylene-vinyl acetate copolymer (EVA); polyester resins such as polyethylene terephthalate (PET), polyethylene naphthalate (PEN), polybutylene terephthalate (PBT); polyvinyl chloride (PVC); vinyl acetate resins; polyphenylene sulfide (PPS); amide resins such as polyamide (nylon), whole aromatic polyamide (aramid); polyimide resins; polyether-ether ketone (PEEK). Two or more such plastic materials may be used herein either singly or as combined. The plastic films or sheets may be non-oriented ones, or may be mono- or bi-oriented ones.

If desired, the substrate for sheet for transfer formation of projected spots of fibers may contain various additives such as inorganic filler (e.g., titanium oxide, zinc oxide), anti-aging agent (e.g., amine-type anti-aging agent, quinoline-type anti-aging agent, hydroquinone-type anti-aging agent, phenolic-type anti-aging agent, phosphorus-containing anti-aging agent, phosphite-type anti-aging agent), antioxidant, UV absorbent (e.g., salicylic acid derivative, benzophenone-type UV absorbent, benzotriazole-type UV absorbent, hindered amine-type UV absorbent), lubricant, plasticizer, colorant (e.g., pigment, dye).

One or both surfaces of the substrate for sheet for transfer formation of projected spots of fibers may be suitably processed through physical treatment such as corona treatment or plasma treatment, or chemical treatment such as undercoating, for the purpose of increasing the adhesive force thereof to the pressure-sensitive adhesive layer for holding projected spots of fibers for transfer formation.

The thickness of the substrate for sheet for transfer formation of projected spots of fibers may fall, for example, between 10 and 300 µm, preferably between 30 and 200 µm or so.

In the sheet (a) for transfer formation of projected spots of fibers, it is important that the pressure-sensitive adhesiveness of the pressure-sensitive adhesive layer for holding the projected spots of fibers for transfer formation is lower than that of the pressure-sensitive adhesive layer to which the projected spots of fibers are to be transferred from the sheet. The expression that "the pressure-sensitive adhesiveness of the pressure-sensitive adhesive layer for holding the projected spots of fibers for transfer formation is lower than that of the pressure-sensitive adhesive layer to which the projected spots of fibers are to be transferred from the sheet" means that the adhesive force of the pressure-sensitive adhesive layer of holding the projected spots of fibers for transfer formation is smaller than that of the pressure-sensitive adhesive layer to which the projected spots of fibers are to be transferred from the sheet. More concretely, the two pressure-sensitive adhesive layers may be compared as follows: A pressure-sensitive adhesive tape or sheet having any one of the pressure-sensitive adhesive layers is stuck to a stainless plate in an atmosphere at 23°C by rolling it once back and forth with a roller of 2 kg, and then left at 23°C for 30 minutes, and thereafter the tape or sheet is peeled off from the stainless plate in an atmosphere at 23°C and 65 % RH at a peeling angle of 180° and at a peeling speed of 300 mm/min, whereupon the adhesive force of the layer to the stainless plate is measured. In the invention, the adhesive force of the pressure-sensitive adhesive layer for holding the projected spots of fibers for transfer formation must be lower than that of the pressure-sensitive adhesive layer to which the projected spots of fibers are to be transferred from the sheet. Preferably, the difference in the adhesive force between the two pressure-sensitive adhesive layers is at least 0.1 N/20 mm (more preferably at least 0.5 N/20 mm), in view of the transferability of the projected spots of fibers from the sheet. The pressure-sensitive adhesive layer for holding the projected spots of fibers for transfer formation is not specifically defined provided that its pressure-sensitive adhesiveness is lower than that of the pressure-sensitive adhesive layer to which the projected spots of fibers are to be transferred from it, and may be formed of any pressure-sensitive adhesive selected from known pressure-sensitive adhesives. For example, the layer may be formed of the same pressure-sensitive adhesive as that for the pressure-sensitive adhesive layer to which the projected spots of fibers are to be transferred from it. Accordingly, the pressure-sensitive adhesive to form the pressure-sensitive adhesive layer for holding the projected spots of fibers for transfer formation may be suitably determined, depending on the type of the pressure-sensitive adhesive to form the pressure-sensitive adhesive layer such as that for pressure-sensitive adhesive tape or sheet to which the projected spots of fibers are to be transferred from it.

Concretely, the pressure-sensitive adhesive to form the pressure-sensitive adhesive layer for holding the projected spots of fibers for transfer formation includes, for example, rubber pressure-sensitive adhesives, acrylic pressure-sensitive adhesives, polyester pressure-sensitive adhesives, urethane pressure-sensitive adhesives, polyamide pressure-sensitive adhesives, epoxy pressure-sensitive adhesives, vinyl alkyl ether pressure-sensitive adhesives, silicone pressure-sensitive adhesives, fluorine-containing pressure-sensitive adhesives, as well as hot-melt pressure-sensitive adhesives. One or more such pressure-sensitive adhesives may be used herein either singly or as combined. The pressure-sensitive adhesives may be in any form of emulsion pressure-sensitive adhesives, solution pressure-sensitive adhesives, oligomer pressure-sensitive adhesives or solid pressure-sensitive adhesives. The pressure-sensitive adhesives may contain, in addition to the polymer component that serves as the pressure-sensitive adhesive component (base polymer) thereof, any additives such as crosslinking agent (e.g., polyisocyanate-based crosslinking agent, alkyletherified melamine compound-based crosslinking agent), tackifier (e.g., rosin derivative resin, polyterpene resin, petroleum resin, phenolic resin), plasticizer, filler, anti-aging agent and the like, depending on the type of the pressure-sensitive adhesives.

It is also important that the pressure-sensitive adhesive layer for holding projected spots of fibers for transfer formation is a pressure-sensitive adhesive layer having the ability to hold the projected spots of fibers for transfer formation with it.

For forming the pressure-sensitive adhesive layer for holding projected spots of fibers for transfer formation with it, any known or conventional method may be employed. For example, a pressure-sensitive adhesive may be applied onto the substrate for sheet for transfer formation of projected spots of fibers (coating method); or a pressure-sensitive adhesive is first applied onto a releasable film such as a releasable liner to form a pressure-sensitive adhesive layer thereon, and then the pressure-sensitive adhesive layer is transferred onto the substrate for sheet for transfer formation of projected spots of fibers (transfer method).

The thickness of the pressure-sensitive adhesive layer for holding projected spots of fibers for transfer formation is not specifically defined. It may fall, for example, between 1 and 100 µm (preferably between 10 and 50 µm) or so.

In the sheet (a) for transfer formation of projected spots of fibers, the releasable liner for the sheet for transfer formation of projected spots of fibers has holes and at least one surface of the releasable liner is a release face. It is important that at least the surface of the releasable liner for the sheet for transfer formation of projected spots of fibers that is to be in contact with a pressure-sensitive adhesive layer onto which the projected spots of fibers are to be transferred from the sheet is a release face. Accordingly, the surface of the releasable liner on the side of the pressure-sensitive adhesive layer for holding the projected spots of fibers for transfer formation of the sheet may not be a release face. When the surface of the releasable liner for the sheet for transfer formation of projected spots of fibers on the side of the pressure-sensitive adhesive layer for holding the projected spots of fibers for transfer formation is not a release face, then the sheet (a) of the type for transfer formation of projected spots of fibers may serve as a releasable liner by itself.

More concretely, for the releasable liner for sheet for transfer formation of projected spots of fibers, for example, usable are substrates coated with a release agent to form a release-treated layer on at least one surface thereof (releasable liner substrate for sheet for transfer formation), as well as low-adhesive substrates formed of fluorine-containing polymer (e.g., polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer), and low-adhesive substrates formed of non-polar polymer (e.g., olefin resin such as polyethylene, polypropylene).

For the releasable liner for sheet for transfer formation of projected spots of fibers, for example, preferred are those formed by coating at least one surface of a releasable liner substrate with a release-treated layer. The releasable liner substrate includes, for example, plastic substrate films (synthetic resin films) such as polyester films (e.g., polyethylene terephthalate films), olefin resin films (e.g., polyethylene films, polypropylene films), polyvinyl chloride films, polyimide films, polyamide films (e.g., nylon films); paper (e.g., woodfree paper, Japanese paper, kraft paper, glassine paper, synthetic paper, top-coated paper); as well as their multi-layered composites (two- or three-layered composites) fabricated through lamination or co-extrusion.

The release agent to form the release-treated layer is not specifically defined. For example, it includes silicone-type release agent, fluorine-containing release agent, long-chain alkyl-type release agent. One or more such release agents may be used herein either singly or as combined.

For the release agent, preferred are silicone-type release agents in view of their releasability and cost. It may be selected from known polysiloxane-type release agents (silicone-type release agents) that comprise a polysiloxane polymer as the essential component thereof. Of such silicone-type release agents, more preferred are polysiloxane-type release agents that undergo addition reaction. The addition-reactive polysiloxane-type release agents may cure through addition-reaction crosslinking (curing reaction) to form a releasable film, and the film exhibits good releasability.

The addition-reactive polysiloxane-type release agent that is employable herein may be a polysiloxane-type release agent composition that contains a polysiloxane polymer having, in the molecule, at least two groups reactive with an Si-H bond-containing group (concretely, the reactive group includes an alkenyl group such as vinyl group or hexenyl group; the "group reactive with an Si-H bond-containing group" may be hereinunder simply referred to as "alkenyl group"), and a polysiloxane polymer having, in the molecule, at least two hydrogen atoms bonding to a silicon atom (in particular, polysiloxane polymer having, in the molecule, at least two silicon atoms having an Si-H bond). The "Si-H bond" means "a bond between a silicon atom (Si) and a hydrogen atom (H)".

In the polysiloxane polymer having at least two alkenyl groups, the polysiloxane polymer structure to form the main chain or the backbone skeleton includes, for example, polyalkylalkylsiloxane polymers such as polydimethylsiloxane polymer, polydiethylsiloxane polymer, polymethylethylsiloxane polymer; polyalkylarylsiloxane polymers; as well as copolymers of multiple silicon-containing monomers [e.g., poly(dimethylsiloxane-dimethylsiloxane)]. Of those, polydimethylsiloxane polymer is preferred.

On the other hand, in the polysiloxane polymer having at least two silicon atoms having an Si-H bond in the molecule, the silicon atom having an Si-H bond may be in any of the main chain or the side branches of the polymer, or that is, it may be in the constitutive units of the main chain or in the constitutive units of the side branches. The number of the silicon atoms to form Si-H bond (the silicon atoms bonded with hydrogen atom) is not specifically defined, provided that it is at least 2.

For the polysiloxane polymer having at least two silicon atoms having an Si-H bond in the molecule, preferred are those having at least two monomer units of -Si(R)(H)O- (where R indicates a hydrocarbon group) in the molecule, and more preferred are polydimethylhydrogensiloxane polymers [e.g., poly(dimethylsiloxane-methylsiloxane)].

In the polysiloxane release agent, the polysiloxane polymer having at least two silicon atoms having an Si-H bond in the molecule functions as a crosslinking agent.

The amount of the polysiloxane polymer having at least two silicon atoms having an Si-H bond in the molecule is not specifically defined. For example, it is preferably so controlled that the number of mols of the silicon atom of the Si-H bond in the polysiloxane polymer having at least two silicon atoms having an Si-H bond in the molecule (this may be hereinafter referred to as "molar number (X)") and the number of mols of the alkenyl group in the polysiloxane polymer having at least two alkenyl groups (this may be hereinafter referred to as "molar number (Y)") may be in a ratio of molar number (X) > molar number (Y). However, the ratio of molar number (X)/molar number (Y) may fall between 0.8 and 3.0 (preferably between 1.1 and 1.8) or so.

When the polysiloxane polymer having at least two alkenyl groups in the molecule is cured by the action thereon of the polysiloxane polymer having at least two silicon atoms having an Si-H bond in the molecule (crosslinking agent), a catalyst may be used. For the catalyst, for example, preferred is a platinum catalyst (e.g., platinum fine particles, platinum compounds such as chloroplatinic acid or its derivatives). The amount of the catalyst to be used is not specifically defined. For example, it may be from 0.1 to 1000 ppm (preferably from 1 to 100 ppm) relative to the polysiloxane polymer having at least two alkenyl groups in the molecule.

For the polysiloxane-type release agent for use in the releasable liner for the sheet for transfer formation of projected spots of fibers of the invention, preferred is a polydimethylsiloxane release agent that comprises a polydimethylsiloxane polymer having at least two vinyl groups, as alkenyl groups, in the molecule, and a polydimethylhydrogensiloxane polymer having at lest two monomer units of -Si(R)(H)O- (wherein R indicates a hydrocarbon group) in the molecule.

The polysiloxane release agent may be prepared by mixing the above-mentioned constitutive components (e.g., the polydimethylsiloxane polymer having at least two alkenyl groups in the molecule, the polysiloxane polymer having at least two silicon atoms having an Si-H bond in the molecule, and optionally catalyst and various additives) optionally in an organic solvent. In the polysiloxane release agent, the polymer component such as the polysiloxane polymer may be dissolved in an organic solvent. If desired, the polysiloxane release agent may contain known or conventional additives (e.g., filler, antistatic agent, antioxidant, UV absorbent, plasticizer, colorant (e.g., dye, pigment)).

Some polysiloxane release agents of the type are available on the market, for example, as TPR6600 (trade name by GE Toshiba Silicone), KS-778 (trade name by Shin-etsu Chemical), and KS-837 (trade name by Shin-etsu Chemical).

The release layer may be formed by applying the release agent onto a predetermined face (at least one surface) of a releasable liner substrate for sheet for transfer formation followed by heating it for drying and curing. In the heating step for drying and curing, any known or conventional heating method (for example, with a hot-air drier) may be employed. When the addition-reactive polysiloxane release agent is used, it may be applied onto a predetermined face of a releasable liner substrate for sheet for transfer formation and then dried or cured for addition reaction to give a releasable film, and the film thus formed exhibits good releasability.

It is important that the amount of the release agent used is suitably controlled. If the amount of the release agent used is too small, then the releasing force (force necessary for release) will increase and it is problematic in practical use; but on the other hand, if the amount is too large, it is expensive and is therefore uneconomical. The suitable amount of the release agent (as a solid content thereof) may be determined depending on the type of the release agent used, and is, for example, from 0.01 to 5 g/m² (preferably from 0.05 to 3 g/m², more preferably from 0.2 to 1 g/m²) or so.

The thickness of the releasable liner for the sheet for transfer formation of projected spots of fibers, the thickness of the releasable liner substrate for sheet for transfer formation and the thickness of the release-treated layer are not specifically defined, and may be suitably determined depending on the profile and the pattern of the projected spots of fibers to be formed on the sheet for transfer formation of the invention.

In particular, in the sheet (a) for transfer formation of projected spots of fibers, the projected spots of fibers are formed inside the holes of the releasable liner and on the surface of the pressure-sensitive adhesive layer for holding the projected spots of fibers for transfer formation. Accordingly, the releasable liner is preferably so designed that the thickness of the peripheral region around each hole of the liner is equal to or higher than the height of the projected spot of fibers for transfer formation in each hole, in view of the transferability of the projected spots of fibers for transfer formation.

For forming the holes in the releasable liner for the sheet for transfer formation of projected spots of fibers, various methods may be employed. For example, one comprises using a known or conventional holing machine [especially, a perforator having a projected structure of various forms and a recessed structure corresponding to the projected structure]; another comprises using heat or light (for forming perforations with thermal head, halogen lamp, xenon lamp, flash lamp, laser or the like); and still another comprises molding with a mold (for example, having projected spots).

It is important that the sites at which holes are formed in the releasable liner for the sheet for transfer formation of projected spots of fibers correspond to the sites of the projected spots of fibers that are to be transferred and formed partly in the surface of a pressure-sensitive adhesive layer.

In the sheet (a) for transfer formation of projected spots of fibers, the projected spots of fibers for transfer formation are formed inside the holes of the releasable liner and on the surface of the pressure-sensitive adhesive layer for holding the projected spots of fibers for transfer formation, as so mentioned hereinabove. The projected spots of fibers for transfer formation have the same structure as that of the projected spots of fibers transferred onto a pressure-sensitive adhesive layer, and the composition of the fibers (type, length and thickness of fibers) is also the same as that of the fibers of the projected spots transferred onto it, also as so mentioned hereinabove.

The projected spots of fibers for transfer formation may be formed on the surface of the pressure-sensitive adhesive layer for holding projected spots of fibers for transfer formation inside the holes of the releasable liner for the sheet for transfer formation of projected spots of fibers, according to a flocking method. For the method, especially preferred is a mode of electrostatic flocking.

The electrostatic flocking method is described. For example, an adherend having a pressure-sensitive adhesive layer to be flocked is set as a counter electrode to one electrode, and a high-voltage direct current is applied to these with applying flocks (fibers) between the two electrodes, whereby the flocks are scattered along the line of electric force owing to the coulomb force so as to dash against the surface of the adherend to be flocked (the surface of the pressure-sensitive adhesive layer). In that manner, the surface of the pressure-sensitive adhesive layer may be flocked. The electrostatic flocking method is not specifically defined, and may be any known one. The method may be for flocking adherends in any of upward, downward or sideward direction, for example, as described in "Principle and Practice of Electrostatic Flocking" in Fibers, Vol. 34, No. 6 (1982-6).

Concretely, a substrate for sheet for transfer formation of projected spots of fibers, a pressure-sensitive adhesive layer for holding projected spots of fibers for transfer formation, and a releasable liner for sheet for transfer formation of projected spots of fibers (holes-having releasable liner) are laminated in that order, then the resulting laminate is flocked (preferably electrostatically) on the surface of its pressure-sensitive adhesive layer for holding projected spots of fibers for transfer formation whereby the projected spots of fibers for transfer formation may be formed in the sites of the surface of the pressure-sensitive adhesive layer for holding projected spots of fibers for transfer formation corresponding to the holes of the releasable liner for sheet for transfer formation of projected spots of fibers.

It is important that the releasable liner for the sheet for transfer formation of projected spots of fibers has holes in the sites corresponding to the projected spots of fibers that are to be partly transferred onto the surface of the pressure-sensitive adhesive layer.

In the sheet (a) for transfer formation of projected spots of fibers, the sites at which the projected spots of fibers are to be formed in the surface of the pressure-sensitive adhesive layer as well as the size and the number of the projected spots of fibers to be formed may be controlled by controlling the sites of the holes to be formed in the releasable liner for sheet for transfer formation of projected spots of fibers and the size and the number of the holes.

After the projected spots of fibers have been transferred onto the surface of a pressure-sensitive adhesive layer from the sheet (a) for transfer formation of projected spots of fibers, the sheet (a) for transfer formation of projected spots of fibers may be peeled off. Not being peeled off, however, the sheet (a) for transfer formation of projected spots of fibers may serve as a releasable liner of the pressure-sensitive adhesive layer.

On the other hand, the sheet (b) for transfer formation of projected spots of fibers having the above-mentioned constitution (b) comprises a substrate having an uneven structure (uneven structure-having substrate for sheet for transfer formation of projected spots of fibers), a release-treated layer formed on the projections of the uneven structure-having substrate for sheet for transfer formation of projected spots of fibers, a pressure-sensitive adhesive layer for holding the projected spots of fibers for transfer formation formed in the bottom of each recess of the uneven structure-having substrate for sheet for transfer formation of projected spots of fibers, and projected spots of fibers for transfer formation formed in the recesses of the uneven structure-having substrate for sheet for transfer formation of projected spots of fibers and on the surface of the pressure-sensitive adhesive layer for holding the projected spots of fibers for transfer formation, as in Fig. 5B.

For the substrate for the sheet (b) of the type for transfer formation of projected spots of fibers, the uneven structure-having substrate for sheet for transfer formation of projected spots of fibers is not specifically defined provided that it has an uneven structure (with projections and recesses). Like that for the sheet (a) for transfer formation of projected spots of fibers mentioned above, the uneven structure-having substrate for sheet for transfer formation of projected spots of fibers may be formed of any suitable thin leafy body (e.g., plastic substrates, metal substrates, paper substrates, fibrous substrates, rubber substrates, foams). The uneven structure-having substrate for sheet for transfer formation of projected spots of fibers may be single-layered or multi-layered. For example, the uneven structure-having substrate for sheet for transfer formation of projected spots of fibers may have a multi-layered (two or three-layered) structure of a plastic substrate with any other substrate (e.g., paper substrate) fabricated in a mode of lamination or co-extrusion.

For the uneven structure-having substrate for sheet for transfer formation of projected spots of fibers, plastic films and sheets are preferred, like those for the substrate for the sheet (a) for transfer formation of projected spots of fibers mentioned above. The material for the plastic films and sheets (plastic material) for the sheet (b) for transfer formation of projected spots of fibers may also be the same as that for the sheet (a) for transfer formation of projected spots of fibers.

If desired, the uneven structure-having substrate for sheet for transfer formation of projected spots of fibers may contain various additives such as inorganic filler, anti-aging agent, antioxidant, UV absorbent, lubricant, plasticizer and colorant, like that for the sheet (a) for transfer formation of projected spots of fibers.

The uneven structure-having substrate for sheet for transfer formation of projected spots of fibers may be suitably processed through physical treatment such as corona treatment or plasma treatment, or chemical treatment such as undercoating, like that for the sheet (a) for transfer formation of projected spots of fibers.

The thickness of the projections of the uneven structure-having substrate for sheet for transfer formation of projected spots of fibers may fall, for example, between 10 and 1000 µm, preferably between 30 and 500 µm or so.

The depth of the recesses of the uneven structure-having substrate for sheet for transfer formation of projected spots of fibers is not specifically defined, and may be suitably determined depending on the size and the profile of the projected spots of fibers for transfer formation to be formed in the recesses. Preferably, however, the depth of the recesses is equal to or smaller than the height of the projected spots of fibers for transfer formation to be formed in the recesses, in view of the transferability of the projected spots of fibers for transfer formation.

The method for forming projections and recesses in a substrate to give the uneven structure-having substrate for sheet for transfer formation of projected spots of fibers is not specifically defined. A flat substrate with no irregularities may be processed for forming holes therein to give the intended uneven structure-having substrate for sheet for transfer formation of projected spots of fibers. Accordingly, the uneven structure-having substrate for sheet for transfer formation of projected spots of fibers may be produced in various methods, like the substrate for the sheet (a) for transfer formation of projected spots of fibers. For example, one comprises using a known or conventional holing machine to form recesses in a flat substrate; another comprises using heat or light for forming recesses (for example, using thermal head, halogen lamp, xenon lamp, flash lamp, laser or the like for forming recesses); and still another comprises molding with a mold (for example, having projections). According to any of these methods, recesses are formed in predetermined sites of the surface of a flat substrate to give the intended uneven structure-having substrate for sheet for transfer formation of projected spots of fibers.

It is important that the sites at which recesses are formed in the uneven structure-having substrate for sheet for transfer formation of projected spots of fibers correspond to the sites of the projected spots of fibers that are to be transferred partly on the surface of a pressure-sensitive adhesive layer.

In the sheet (b) for transfer formation of projected spots of fibers, the release-treated layer is formed of a release agent. The release agent for it may be selected from those mentioned hereinabove for the release-treated layer of the releasable liner for the sheet (a) for transfer formation of projected spots of fibers. For example, it includes silicone-type release agent, fluorine-containing release agent, long-chain alkyl-type release agent. One or more such release agents may be used herein either singly or as combined. For the release agent, preferred are silicone-type release agents in view of their releasability and cost, like that for the sheet (a) for transfer formation of projected spots of fibers. Above all, especially preferred are addition-reactive polysiloxane-type release agents such as those mentioned hereinabove.

The method for forming the release-treated layer and the amount of the release agent for the layer may be the same as those for the sheet (a) for transfer formation of projected spots of fibers. For example, the release-treated layer may be formed by applying a release agent onto the projections of the uneven structure-having substrate for sheet for transfer formation of projected spots of fibers.

When the uneven structure-having substrate for sheet for transfer formation of projected spots of fibers is formed of a releasable material (for example, poorly adhesive material such as low-density polyethylene), the release-treated layer may be omitted as the case may be.

In the sheet (b) for transfer formation of projected spots of fibers, it is also important that the pressure-sensitive adhesiveness of the pressure-sensitive adhesive layer for holding projected spots of fibers for transfer formation is lower than that of the pressure-sensitive adhesive layer onto which the projected spots of fibers are to be transferred from the sheet, like in the sheet (a) for transfer formation of projected spots of fibers mentioned above. The pressure-sensitive adhesive layer for holding projected spots of fibers of the sheet (b) for transfer formation of projected spots of fibers may be formed of the same pressure-sensitive adhesive as that for the pressure-sensitive adhesive layer in the sheet (a) for transfer formation of projected spots of fibers. For example, the pressure-sensitive adhesive includes rubber pressure-sensitive adhesives, acrylic pressure-sensitive adhesives, polyester pressure-sensitive adhesives, urethane pressure-sensitive adhesives, polyamide pressure-sensitive adhesives, epoxy pressure-sensitive adhesives, vinyl alkyl ether pressure-sensitive adhesives, silicone pressure-sensitive adhesives, fluorine-containing pressure-sensitive adhesives, as well as hot-melt pressure-sensitive adhesives.

It is also important that the pressure-sensitive adhesive layer for holding projected spots of fibers in the sheet (b) for transfer formation of projected spots of fibers has the ability to hold the projected spots of fibers with it, like that in the sheet (a) for transfer formation of projected spots of fibers.

The method for forming the pressure-sensitive adhesive layer for holding the projected spots of fibers for transfer formation and the thickness of the layer may be the same as those for the sheet (a) for transfer formation of projected spots of fibers mentioned above. For example, the pressure-sensitive adhesive layer for holding the projected spots of fibers for transfer formation may be formed by applying a pressure-sensitive adhesive to the recesses of the uneven structure-having substrate for sheet for transfer formation of projected spots of fibers.

In the sheet (b) for transfer formation of projected spots of fibers, the projected spots of fibers for transfer formation are formed in the recesses of the uneven structure-having substrate for sheet for transfer formation of projected spots of fibers and on the surface of the pressure-sensitive adhesive layer for holding the projected spots of fibers for transfer formation, as so mentioned hereinabove. Like those in the sheet (a) for transfer formation of projected spots of fibers, the projected spots of fibers for transfer formation may be formed, for example, according to a flocking method (especially, electrostatic flocking method).

Concretely, an uneven structure-having substrate for sheet for transfer formation of projected spots of fibers, which has projections and recesses and in which a release-treated layer is formed on the projections while a pressure-sensitive adhesive layer for holding projected spots of fibers for transfer formation is formed in the bottom of each recess, is flocked (especially electrostatically) on the surface of the pressure-sensitive adhesive layer thereof, whereby the intended projected spots of fibers for transfer formation may be formed in the recesses of the uneven structure-having substrate for sheet for transfer formation of projected spots of fibers and on the pressure-sensitive adhesive layer for holding the projected spots of fibers for transfer formation.

In the sheet (b) for transfer formation of projected spots of fibers, the sites at which the projected spots of fibers are to be formed in the surface of the pressure-sensitive adhesive layer as well as the size and the number of the projected spots of fibers to be formed may be controlled by controlling the sites of the recesses to be formed in the uneven structure-having substrate for sheet for transfer formation of projected spots of fibers and the size and the number of the recesses.

After the projected spots of fibers have been transferred onto the surface of a pressure-sensitive adhesive layer from the sheet (a) for transfer formation of projected spots of fibers or the sheet (b) for transfer formation of projected spots of fibers of the invention, the sheet (a) for transfer formation of projected spots of fibers or the sheet (b) for transfer formation of projected spots of fibers may be peeled off. Not being peeled off, however, the sheet (a) or (b) for transfer formation of projected spots of fibers may serve as a releasable liner of the pressure-sensitive adhesive layer.

In the sheet (a) or (b) for transfer formation of projected spots of fibers mentioned above, the projected spots of fibers are formed in the recesses. Therefore, raised spots of fibers that are raised from the sheet substrate may be readily formed as the projected spots of fibers. Accordingly, when the sheet (a) or (b) for transfer formation of projected spots of fibers is used for transferring the raised spots onto the surface of a pressure-sensitive adhesive layer, the raised fibers may be readily transferred onto it while they are still kept raised on the pressure-sensitive adhesive layer. Therefore, the sheet for transfer formation of projected spots of fibers of the invention enables effective transfer formation of raised fibers onto the surface of a pressure-sensitive adhesive layer, and the adhesive force of the pressure-sensitive adhesive layer thus having received the raised spots of fibers from the sheet may be readily controlled by using a smaller amount of fibers.

### (Substrate to receive projected spots of fibers through transfer formation)

The sheet for transfer formation of projected spots of fibers of the invention may transfer the projected spots of fibers onto the surface of a pressure-sensitive adhesive layer. The substrate that receives the projected spots of fibers from the sheet for transfer formation of projected spots of fibers (this may be hereinafter referred to as "adherend to receive projected spots of fibers from transfer sheet'') is not specifically defined, provided that it has a pressure-sensitive adhesive layer. For example, it may be formed of a pressure-sensitive adhesive layer alone, or may be a structure having a pressure-sensitive adhesive layer formed on a substrate or support. The substrate or support on which the pressure-sensitive adhesive layer is to be formed for the adherend to receive projected spots of fibers from the transfer sheet of the invention is not specifically defined, and may have any desired profile. Preferably, it is a sheet-like substrate or support. Accordingly, one preferred embodiment of the adherend to receive projected spots of fibers from the transfer sheet of the invention is a pressure-sensitive adhesive tape or sheet.

### (Pressure-sensitive adhesive tape or sheet)

The pressure-sensitive adhesive tape or sheet (pressure-sensitive adhesive tape or sheet to receive the projected spots of fibers through transfer formation from the sheet for transfer formation of projected spots of fibers of the invention) may be any one having a pressure-sensitive adhesive layer (pressure-sensitive adhesive layer for pressure-sensitive adhesive tape or sheet) on at least one surface of a support. Concretely, it includes (1) a substrate-supported double-sided pressure-sensitive adhesive tape or sheet in which a pressure-sensitive adhesive layer for pressure-sensitive adhesive tape or sheet is formed on both surfaces of the substrate thereof serving as a support; (2) a substrate-supported single-sided pressure-sensitive adhesive tape or sheet in which a pressure-sensitive adhesive layer for pressure-sensitive adhesive tape or sheet is formed on one surface of the substrate thereof serving as a support; and (3) a substrateless double-sided pressure-sensitive adhesive tape or sheet in which both surfaces of the pressure-sensitive adhesive layer for pressure-sensitive adhesive tape or sheet are protected with one or two releasable liners (releasable liners for pressure-sensitive adhesive tape or sheet). The pressure-sensitive adhesive tape or sheet may be a single-sided pressure-sensitive adhesive tape or sheet in which one surface alone is pressure-sensitive adhesive; or may be a double-sided pressure-sensitive adhesive tape or sheet in which both surfaces are pressure-sensitive adhesive. In the double-sided pressure-sensitive adhesive tape or sheet, projected spots of fibers may be formed in one pressure-sensitive adhesive surface or in both pressure-sensitive adhesive surfaces.

The pressure-sensitive adhesive tape or sheet may be wound up into a coil or roll; or the pressure-sensitive adhesive sheet may be in one layer or in multiple layers piled up.

### (Pressure-sensitive adhesive layer for pressure-sensitive adhesive tape or sheet)

The pressure-sensitive adhesive to form the pressure-sensitive adhesive layer for pressure-sensitive adhesive tape or sheet is not specifically defined, and may be any known one. For example, it includes rubber pressure-sensitive adhesives, acrylic pressure-sensitive adhesives, polyester pressure-sensitive adhesives, urethane pressure-sensitive adhesives, polyamide pressure-sensitive adhesives, epoxy pressure-sensitive adhesives, vinyl alkyl ether pressure-sensitive adhesives, silicone pressure-sensitive adhesives, fluorine-containing pressure-sensitive adhesives. The pressure-sensitive adhesives may be hot-melt pressure-sensitive adhesives. One or more such pressure-sensitive adhesives may be used herein either singly or as combined. The pressure-sensitive adhesives may be in any form of emulsion pressure-sensitive adhesives, solution pressure-sensitive adhesives, oligomer pressure-sensitive adhesives or solid pressure-sensitive adhesives.

The pressure-sensitive adhesives may contain, in addition to the polymer component that serves as the pressure-sensitive adhesive component (base polymer) thereof, any additives such as crosslinking agent (e.g., polyisocyanate-based crosslinking agent, alkyletherified melamine compound-based crosslinking agent), tackifier (e.g., rosin derivative resin, polyterpene resin, petroleum resin, phenolic resin), plasticizer, filler, anti-aging agent and the like, depending on the type of the pressure-sensitive adhesives. When the pressure-sensitive adhesive is crosslinked in forming the pressure-sensitive adhesive layer for pressure-sensitive adhesive tape or sheet, any method is employable, including, for example, thermal crosslinking to be effected under heat, ultraviolet crosslinking to be effected through exposure to UV rays (UV crosslinking), electron beam crosslinking to be effected through exposure to electron beams (EB crosslinking), or natural curing to be effected at room temperature for spontaneously curing the pressure-sensitive adhesive.

For the pressure-sensitive adhesive, preferred are rubber pressure-sensitive adhesives that comprise, as the base polymer thereof, any of natural rubbers or various synthetic rubbers (e.g., polyisoprene rubber, styrene-butadiene rubber, styrene-isoprene-styrene block copolymer rubber, styrene-butadiene-styrene block copolymer rubber, regenerated rubber, butyl rubber, polyisobutylene); and acrylic pressure-sensitive adhesives that comprise, as the base polymer thereof, any of acrylic polymers (homopolymers or copolymers) from one or more monomers of alkyl (meth)acrylates.

The alkyl (meth)acrylates for the acrylic pressure-sensitive adhesives are, for example, C₁₋₂₀ alkyl (meth)acrylates such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate [preferably C₄₋₁₈ (linear or branched) alkyl (meth)acrylates]. These alkyl (meth)acrylates may be suitably selected depending on the intended pressure-sensitive adhesiveness of the pressure-sensitive adhesives to be prepared. One or more such alkyl (meth)acrylate may be used herein either singly or as combined.

In the acrylic pressure-sensitive adhesives, the alkyl (meth)acrylate may be optionally copolymerized with any other monomer copolymerizable with the alkyl (meth)acrylate (comonomer). The comonomer includes, for example, carboxyl group-containing monomers and their anhydrides, such as (meth)acrylic acid, itaconic acid, maleic acid, fumaric acid, crotonic acid, isocrotonic acid; sulfonic acid group-containing monomers such as sodium vinylsulfonate; aromatic vinyl compounds such as styrene, substituted styrene; cyano group-containing monomers such as acrylonitrile; olefins such as ethylene, propylene, butadiene; vinyl esters such as vinyl acetate; vinyl chloride; amido group-containing monomers such as acrylamide, methacrylamide, N-vinylpyrrolidone, N,N-dimethyl(meth)acrylamide; hydroxyl group-containing monomers such as hydroxyalkyl (meth)acrylate, glycerin dimethacrylate; amino group-containing monomers such as aminoethyl (meth)acrylate, (meth)acryloylmorpholine; imido group-containing monomers such as cyclohexylmaleimide, isopropylmaleimide; epoxy group-containing monomers such as glycidyl (meth)acrylate, methylglycidyl (meth)acrylate; isocyanato group-containing monomers such as 2-methacryloyloxyethyl isocyanate. The comonomer further includes polyfunctional comonomers (polyfunctional monomers), such as triethylene glycol di(meth)acrylate, diethylene glycol di(meth)acrylate, ethylene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinylbenzene. One or more of these comonomers may be used herein either singly or as combined.

For forming the pressure-sensitive adhesive layer for pressure-sensitive adhesive tape or sheet, any known or conventional method may be employed. For example, when a substrate-supported pressure-sensitive adhesive tape or sheet that has a substrate for it is produced, a pressure-sensitive adhesive may be applied onto the substrate that serves as a support for pressure-sensitive adhesive tape or sheet (coating method); or a pressure-sensitive adhesive is first applied onto a releasable film such as a releasable liner to form a pressure-sensitive adhesive layer thereon, and then the pressure-sensitive adhesive layer is transferred onto a substrate for pressure-sensitive adhesive tape or sheet (transfer method). On the other hand, when a substrateless pressure-sensitive adhesive tape or sheet that does not have a substrate for it is produced, a pressure-sensitive adhesive may be applied onto the release face of a releasable liner that serves as a support for pressure-sensitive adhesive tape or sheet (coating method).

The thickness of the pressure-sensitive adhesive layer for pressure-sensitive adhesive tape or sheet is not specifically defined. It may fall, for example, between 1 and 1000 µm (preferably between 10 and 500 µm) or so.

### (Support for pressure-sensitive adhesive tape or sheet)

The support for the pressure-sensitive adhesive layer of pressure-sensitive adhesive tape or sheet is described. When the pressure-sensitive adhesive tape or sheet is a substrate-supported one that has a pressure-sensitive adhesive layer on one or both surfaces thereof, it may have a substrate for pressure-sensitive adhesive tape or sheet. On the other hand, when the pressure-sensitive adhesive tape or sheet is a substrateless double-sided pressure-sensitive adhesive tape or sheet, a releasable liner (separator) for pressure-sensitive adhesive tape or sheet may be employed. In the substrate-supported, single-sided pressure-sensitive adhesive or double-sided pressure-sensitive adhesive tape or sheet, the substrate that serves as a support is coated with a pressure-sensitive adhesive layer for pressure-sensitive adhesive tape or sheet on one or both surfaces thereof, and the surface of the pressure-sensitive adhesive layer for pressure-sensitive adhesive tape or sheet may be protected with the release face on the back of the substrate for pressure-sensitive adhesive tape or sheet and with a releasable liner for pressure-sensitive adhesive tape or sheet provided on it. When the releasable liner for pressure-sensitive adhesive tape or sheet is layered on the surface of the pressure-sensitive adhesive layer of pressure-sensitive adhesive tape or sheet, onto which projected spots of fibers are to be transferred, it may be peeled off before the projected spots of fibers are transferred onto the pressure-sensitive adhesive layer of the pressure-sensitive adhesive tape or sheet.

On the other hand, in the substrateless double-sided pressure-sensitive adhesive tape or sheet, the releasable liner for the pressure-sensitive adhesive tape or sheet serves as a support for the pressure-sensitive adhesive layer of the pressure-sensitive adhesive tape or sheet. The releasable liner that serves as a support of the pressure-sensitive adhesive tape or sheet acts to support the pressure-sensitive adhesive layer of the pressure-sensitive adhesive tape or sheet and to protect the surface of the pressure-sensitive adhesive layer until the pressure-sensitive adhesive tape or sheet is used. When the releasable liner for the pressure-sensitive adhesive tape or sheet is layered on the surface of the pressure-sensitive adhesive layer of pressure-sensitive adhesive tape or sheet, onto which projected spots of fibers are to be transferred, it may be peeled off before the projected spots of fibers are transferred onto the pressure-sensitive adhesive layer of the pressure-sensitive adhesive tape or sheet.

### (Substrate for pressure-sensitive adhesive tape or sheet)

For the substrate for pressure-sensitive adhesive tape or sheet, usable are any suitable thin leafy bodies, for example, plastic substrates such as plastic films or sheets; metal substrates such as metal foils, metal plates; paper substrates of paper (e.g., woodfree paper, Japanese paper, kraft paper, glassine paper, synthetic paper, top-coated paper); fibrous substrates such as fabrics, nonwoven fabrics, nets; rubber substrates such as rubber sheets; foams such as foamed sheets. The substrate for pressure-sensitive adhesive tape or sheet may be single-layered or multi-layered. For example, the substrate for pressure-sensitive adhesive tape or sheet may have a multi-layered (two or three-layered) structure of a plastic substrate with any other substrate (e.g., paper substrate) fabricated in a mode of lamination or co-extrusion.

For the substrate for pressure-sensitive adhesive tape or sheet, plastic films and sheets are preferred. The material for the plastic films and sheets (plastic material) includes, for example, olefin resins from α-olefin monomer such as polyethylene (PE), polypropylene (PP), ethylene-propylene copolymer, ethylene-vinyl acetate copolymer (EVA); polyester resins such as polyethylene terephthalate (PET), polyethylene naphthalate (PEN), polybutylene terephthalate (PBT); polyvinyl chloride (PVC); vinyl acetate resins; polyphenylene sulfide (PPS); amide resins such as polyamide (nylon), whole aromatic polyamide (aramid); polyimide resins; polyether-ether ketone (PEEK). Two or more such plastic materials may be used herein either singly or as combined. The plastic films or sheets may be non-oriented ones, or may be mono- or bi-oriented ones.

If desired, the substrate for pressure-sensitive adhesive tape or sheet may contain various additives such as inorganic filler (e.g., titanium oxide, zinc oxide), anti-aging agent (e.g., amine-type anti-aging agent, quinoline-type anti-aging agent, hydroquinone-type anti-aging agent, phenolic-type anti-aging agent, phosphorus-containing anti-aging agent, phosphite-type anti-aging agent), antioxidant, UV absorbent (e.g., salicylic acid derivative, benzophenone-type UV absorbent, benzotriazole-type UV absorbent, hindered amine-type UV absorbent), lubricant, plasticizer, colorant (e.g., pigment, dye).

One or both surfaces of the substrate for pressure-sensitive adhesive tape or sheet may be suitably processed through physical treatment such as corona treatment or plasma treatment, or chemical treatment such as undercoating, for the purpose of increasing the adhesive force thereof to the pressure-sensitive adhesive layer for pressure-sensitive adhesive tape or sheet to be formed on the substrate.

The thickness of the substrate for pressure-sensitive adhesive tape or sheet may fall, for example, between 10 and 300 µm, preferably between 30 and 200 µm or so.

### (Releasable liner for pressure-sensitive adhesive tape or sheet)

For the releasable liner for pressure-sensitive adhesive tape or sheet, for example, usable are substrates coated with a release agent to form a release-treated layer on at least one surface thereof, as well as low-adhesive substrates formed of fluorine-containing polymer (e.g., polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer), and low-adhesive substrates formed of non-polar polymer (e.g., olefin resin such as polyethylene, polypropylene).

For the releasable liner for pressure-sensitive adhesive tape or sheet, for example, preferred are those formed by coating at least one surface of a releasable liner substrate with a release-treated layer. The releasable liner substrate includes, for example, synthetic resin films such as polyester films (e.g., polyethylene terephthalate films), olefin resin films (e.g., polyethylene films, polypropylene films), polyvinyl chloride films, polyimide films, polyamide films (e.g., nylon films); paper (e.g., woodfree paper, Japanese paper, kraft paper, glassine paper, synthetic paper, top-coated paper); as well as their multi-layered composites (two- or three-layered composites) fabricated through lamination or co-extrusion.

The release agent to form the release-treated layer is not specifically defined. For it, for example, usable are the release agents mentioned hereinabove for the release-treated layer for release liner for the sheet for transfer formation of projected spots of fibers of the invention. The release agents include, for example, silicone-type release agents, fluorine-containing release agents, long-chain alkyl-type release agents. One or more such release agents may be used herein either singly or as combined. Like those for the sheet for transfer formation of projected spots of fibers mentioned hereinabove, silicone-type release agents are also preferred for the release-treated layer for pressure-sensitive adhesive tape or sheet in view of the releasability and the cost of the agents, and more preferred are the above-mentioned, addition-reactive polysiloxane-type release agents.

It is important that the amount of the release agent (especially the addition-reactive polysiloxane-type release agent) to form the release-treated layer is suitably controlled. If the amount of the release agent used to form the release-treated layer is too small, then the releasing force (force necessary for release) will increase and it is problematic in practical use; but on the other hand, if the amount is too large, it is expensive and is therefore uneconomical. The suitable amount of the release agent (as a solid content thereof) may be determined depending on the type of the release agent used, and is, for example, from 0.01 to 5 g/m² (preferably from 0.05 to 3 g/m², more preferably from 0.2 to 1 g/m²) or so.

The thickness of the releasable liner for the pressure-sensitive adhesive tape or sheet, the thickness of the releasable liner substrate and the thickness of the release-treated layer are not specifically defined.

### (Substrate with projected spots of fibers on the surface)

Using the sheet for transfer formation of projected spots of fibers of the invention, the projected spots of fibers may be transferred at least partly (partly or entirely) onto the surface of the pressure-sensitive adhesive layer of an adherend to receive projected sports of fibers from transfer sheet (for example, pressure-sensitive adhesive tape or sheet). The substrate having received the projected spots of fibers from the transfer sheet of the invention (e.g., projected fiber spots-having pressure-sensitive adhesive tape or sheet) has the projected spots of fibers at least partly in the surface of the pressure-sensitive adhesive layer thereof, and therefore it may be used in various fields utilizing the projected spots of fibers. For example, the substrate that has projected spots of fibers formed entirely in the surface of the pressure-sensitive adhesive layer thereof does not have adhesiveness on its surface with the projected spots fibers formed therein, and therefore, it is for non-adhesive applications that utilize the projected spots of fibers. For example, it is used for furniture decorations, cushion materials, protective materials, release materials.

On the other hand, the substrate that has projected spots of fibers formed partly in the surface of the pressure-sensitive adhesive layer thereof has adhesiveness on its surface with the projected spots fibers formed therein, and therefore, it is for adhesive applications, applications that utilize the projected spots of fibers, or applications that utilize both the adhesiveness and the projected spots of fibers. One example of adhesive applications is described. When the surface of the substrate having projected spots of fibers formed thereon is stuck to an adherend under a small load applied thereto, then it may be temporarily adhered to the adherend. Therefore, after the thus temporarily-adhered substrate is reworked or repositioned on the adherend, a large load may be applied thereto so that the two could be firmly adhered to each other. To that effect, the substrate may be used for pressure-sensitive adhesive tapes or sheets that require good reworkability and repositionability.

When the substrate having projected spots of fibers is temporarily adhered to an adherend, the load to be applied to it is not specifically defined, and may be controlled depending on the height of the projected spots, and the thickness of the fibers and the type of the material of the projected spots. Accordingly, the adhesive force of the pressure-sensitive adhesive tape or sheet immediately after it has been temporarily adhered to an adherend may be controlled in any desired manner depending on the projected spots of fibers that the tape or sheet has.

After the sheet for transfer formation of projected spots of fibers has been applied to an adherend to receive projected spots of fibers from transfer sheet (especially pressure-sensitive adhesive tape or sheet) and it has given the projected spots of fibers to the adherend to receive projected spots of fibers from transfer sheet, then it may be peeled off from the adherend to receive projected spots of fibers from transfer sheet, but as so mentioned hereinabove, it may not be peeled off but may be kept remaining on the adherend to receive projected spots of fibers from transfer sheet to serve as a releasable liner. When the sheet for transfer formation of projected spots of fibers is peeled off after it has given its projected spots of fibers to the adherend to receive projected spots of fibers from transfer sheet, then the surface of the projected spots of fibers thus having been transferred onto the pressure-sensitive adhesive layer of the adherend to receive projected spots of fibers from transfer sheet may be protected with a recesses-having releasable liner (in particular, a release liner having recesses in the sites corresponding to the projected spots of fibers on the surface of the pressure-sensitive adhesive layer).

From the sheet for transfer formation of projected spots of fibers, the projected spots of fibers may be partly transferred onto a substrate (especially pressure-sensitive adhesive tape or sheet). As so mentioned hereinabove, the resulting substrate thus having the projected spots of fibers transferred onto the surface of the pressure-sensitive adhesive layer thereof may be attached to an adherend and may be temporarily adhered thereto under a small load applied thereto. In addition, the thus temporarily-adhered substrate may be readily reworked or repositioned. In other words, the substrate (pressure-sensitive adhesive tape or sheet) having projected spots of fibers transferred from the transfer sheet of the invention has good reworkability and repositionability.

Accordingly, the projected fibers-having substrate (e.g., projected spots-having pressure-sensitive adhesive tape or sheet) is favorable for those that require reworking or repositioning after temporary adhesion. In particular, the pressure-sensitive adhesive tape or sheet is especially favorable for flooring material fixation (as pressure-sensitive adhesive tape or sheet for flooring). When the pressure-sensitive adhesive tape or sheet is used for flooring material fixation, it is preferably a substrate-supported double-sided pressure-sensitive adhesive tape or sheet that has a pressure-sensitive adhesive layer on both surfaces of the substrate and has projected spots of fibers partly in the surface of the pressure-sensitive adhesive layer on one surface of the substrate [that is, substrate-supported double-sided pressure-sensitive adhesive tape or sheet that has, on one surface of the substrate, a pressure-sensitive adhesive layer with projected spots of fibers partly formed in its surface (pressure-sensitive adhesive layer having projected spots of fibers), and has, on the other surface of the substrate, a pressure-sensitive adhesive layer not having projected spots of fibers in its surface (pressure-sensitive adhesive layer not having projected spots of fibers)]. Accordingly, the pressure-sensitive adhesive tape or sheet to receive the projected spots of fibers from the transfer sheet of the invention for flooring material fixation is preferably a substrate-supported double-sided pressure-sensitive adhesive tape or sheet.

For adhering a flooring material to a floor base by the use of the fiber spots-having pressure-sensitive adhesive tape or sheet, the method is not specifically defined. For example, the following method is preferred.

### [Method of adhering flooring material to floor base]

As the fiber spots-having pressure-sensitive adhesive tape or sheet, for example, used is a substrate-supported double-sided pressure-sensitive adhesive tape or sheet that has, on one surface of the substrate, a pressure-sensitive adhesive layer having projected spots of fibers, and has, on the other surface of the substrate, a pressure-sensitive adhesive layer not having projected spots of fibers. This is fitted to a flooring material in such a manner that its pressure-sensitive adhesive face on the side of the pressure-sensitive adhesive layer not having projected spots of fibers faces the flooring material, and then the thus-processed flooring material is inserted into a predetermined area on a floor base, and the pressure-sensitive adhesive face of the pressure-sensitive adhesive layer that has projected spots of fibers formed thereon is temporarily adhered to the floor base. With that, the flooring material is moved to a predetermined area on the floor base, and then pressed strongly so as to be adhered to the floor base via the pressure-sensitive adhesive tape or sheet therebetween.

The invention provides a sheet for transfer formation of projected spots of fibers, which is used in producing a substrate having projected spots of fibers in its surface. Using the sheet for transfer formation of projected spots of fibers of the invention, it is possible to produce pressure-sensitive adhesive tapes or sheets of good reworkability and repositionability. In particular, the sheet can produce the pressure-sensitive adhesive tape or sheet useful for pressure-sensitive adhesive tapes or sheets for flooring material fixation.

The invention is described in more detail with reference to the following Examples, to which, however, the invention should not be limited. In the following Examples and Comparative Examples, the samples were flocked in a box (size: 2.5 m in length in the line flow direction × 1.3 m in width × 1.4 m in height) provided with a line on which a negatively-charged long sheet is run from one side to the other side thereof while sprayed with positively-charged fibers introduced into the box. Concretely, fibers were sprayed into the box from one upper hole formed in the box at a voltage of 30 kV applied thereto, and a long sheet is, while run on the line at a line speed of 5 m/min with its face to be flocked being upward, electrostatically flocked with the sprayed fibers.

### EXAMPLE 1

A heptane solution of 1 wt.% polydimethylsiloxane-type silicone release agent (trade name, KS-778 by Shin-etsu Chemical) was applied to both surfaces of a polyester film (trade name, Lumirror #38 by Toray, having a thickness of 38 µm) , and then dried at 120°C for 2 minutes to produce a releasable liner (releasable paper - this may be hereinafter referred to as "releasable liner A1"). In this releasable liner A1, the amount of the silicone release agent was 0.05 g/m².

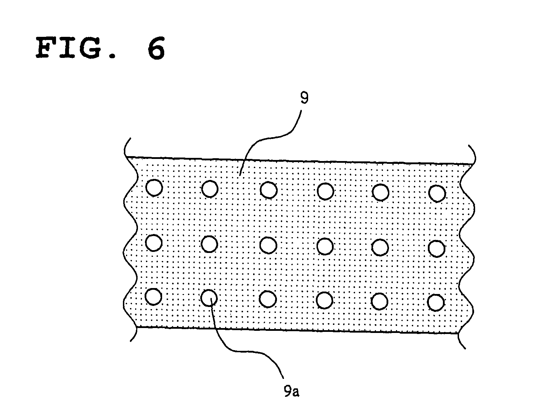

Using a perforator (300-W laboratory embossing machine, HEM1 trade name by Yuri Roll) of which the projections and recesses are so designed that they may form perforations each having an area of 0.8 mm² at intervals of 10 mm, the releasable liner A1 was perforated to have a pattern of perforations as in Fig. 6. Thus processed, the releasable liner A1 may be hereinafter referred to as "perforated releasable liner A1". In the perforated releasable liner A1, the mean perforation area of each perforation was 0.8 mm², and the overall perforation area of all the perforations was 0.8 % of the overall surface area of the liner. Fig. 6 is a schematic view showing a perforated releasable liner. In Fig. 6, 9 is a perforated releasable liner, and 9a is a perforation.

Next, an acrylic pressure-sensitive adhesive (trade name, Rheocoat 1020 by Toray Cortex) was applied on one surface of a polyethylene film (trade name, SHO by Ohkura Industry, having a thickness of 50 µm - this may be hereinafter referred to as "Substrate A1") to form thereon a pressure-sensitive adhesive layer having a dry thickness of 10 µm (this may be hereinafter referred to as "pressure-sensitive adhesive layer A1"), and the pressure-sensitive adhesive layer A1 was stuck to the perforated releasable liner A1. Next, using polyamide fibers (thickness, 1.5 deniers; length, 0.3 mm), this was electrostatically flocked on the surface of the perforated releasable liner A1 thereof, whereby the polyamide fibers were planted in the sites of the pressure-sensitive adhesive layer A1 corresponding to the perforations of the perforated releasable liner A1. As a result, the process gave a transfer sheet that has raised spots of fibers in the surface of the pressure-sensitive adhesive layer thereof (this may be hereinafter referred to as "sheet A1 for transfer formation of projected spots of fibers"), as in Fig. 5A. Specifically, the sheet A1 for transfer formation of projected spots of fibers has a layer constitution of "substrate A1/pressure-sensitive adhesive layer A1 having raised spots of fibers on its surface/perforated releasable liner A1".

On the other hand, a heptane solution of 1 wt.% polydimethylsiloxane-type silicone release agent (trade name, TPR6600 by GE Toshiba Silicone) was applied onto polyethylene-laminated kraft paper to prepare a releasable liner (this may be hereinafter referred to as "releasable liner B1"). The release face of the releasable liner B1 was then coated with an acrylic pressure-sensitive adhesive (this comprises butyl acrylate-acrylic acid copolymer as the base polymer) to form thereon a pressure-sensitive adhesive layer having a dry thickness of 20 µm (this may be hereinafter referred to as "pressure-sensitive adhesive layer B1a"). A polyester nonwoven fabric (this may be hereinafter referred to as "substrate B1") was stuck to the surface of the pressure-sensitive adhesive layer B1a, and then the surface of the substrate B1 (polyester nonwoven fabric) was coated with an acrylic pressure-sensitive adhesive (this comprises butyl acrylate-acrylic acid copolymer as the base polymer) to form thereon a pressure-sensitive adhesive layer having a dry thickness of 20 µm (this may be hereinafter referred to as "pressure-sensitive adhesive layer B1b"). The process gave a double-sided pressure-sensitive adhesive sheet (this may be hereinafter referred to as "double-sided pressure-sensitive adhesive sheet B1"). Specifically, the double-sided pressure-sensitive adhesive sheet B1 has a layer constitution of "releasable liner B1/pressure-sensitive adhesive layer B1a/substrate B1/pressure-sensitive adhesive layer B1b".

The adhesive force of the pressure-sensitive adhesive layer B1b is larger than that of the pressure-sensitive adhesive layer A1. Concretely, the adhesive force of the pressure-sensitive adhesive layer B1b (23°C × 65 %RH, 180° peeling, peeling speed 300 mm/min) was 7 N/20 mm; while the adhesive force of the pressure-sensitive adhesive layer A1 (23°C × 65 %RH, 180° peeling, peeling speed 300 mm/min) was 3 N/20 mm. The adhesive force of the samples was measured as follows: The surface of the pressure-sensitive adhesive layer B1b of the double-sided pressure-sensitive adhesive sheet B1, or the surface of the pressure-sensitive adhesive layer A1 of the sheet having a layer constitution of substrate A1/pressure-sensitive adhesive layer A1 was stuck to a stainless plate in an atmosphere at 23°C by rolling it once back and forth with a roller of 2 kg, and then left at 23°C for 30 minutes, and thereafter the double-sided pressure-sensitive adhesive sheet B1 or the sheet having a layer constitution of substrate A1/pressure-sensitive adhesive layer A1 was peeled off from the stainless plate in an atmosphere at 23°C and 65 % RH at a peeling angle of 180° and at a peeling speed of 300 mm/min, whereupon the adhesive force of the layer to the stainless plate is measured.

Next, the sheet A1 for transfer formation of projected spots of fibers was stuck under pressure to the surface of the pressure-sensitive adhesive layer B1b of the double-sided pressure-sensitive adhesive sheet B1 with the perforated releasable liner A1 thereof inside, as in Fig. 1A. After thus stuck, the sheet A1 was peeled off from the double-sided pressure-sensitive adhesive sheet B1, as in Fig. 1B. The raised spots of fibers were transferred onto the surface of the pressure-sensitive adhesive layer B1b of the double-sided pressure-sensitive adhesive sheet B1, and the process gave a raised fibers-having double-sided pressure-sensitive adhesive sheet (this may be hereinafter referred to as "raised fibers-having double-sided pressure-sensitive adhesive sheet B1"). Specifically, the raised fibers-having double-sided pressure-sensitive adhesive sheet B1 has a layer constitution of "releasable liner B1/pressure-sensitive adhesive layer B1a/substrate B1/raised fibers-having pressure-sensitive adhesive layer B1b". The raised fibers-having pressure-sensitive adhesive layer B1b on the surface of the raised fiber-having double-sided pressure-sensitive adhesive sheet B1 is protected with a laminate of which the layer constitution corresponds to that of the transfer sheet A1 not having the raised spots of fibers.

### EXAMPLE 2

A heptane solution of 1 wt.% polydimethylsiloxane-type silicone release agent (trade name, KS-837 by Shin-etsu Chemical) was applied to both surfaces of a polyethylene film (trade name, NSO by Ohkura Industry, having a thickness of 60 µm), and then dried at 120°C for 2 minutes to produce a releasable liner (releasable paper - this may be hereinafter referred to as "releasable liner A2"). In this releasable liner A2, the amount of the silicone release agent was 0.05 g/m².

Using the same perforator as in Example 1, of which, however, the projections and recesses are so designed that they may form perforations each having an area of 1 mm² at intervals of 5 mm, the releasable liner A2 was perforated to have a pattern of perforations like in Example 1. Thus processed, the releasable liner A2 may be hereinafter referred to as "perforated releasable liner A2". In the perforated releasable liner A2, the mean perforation area of each perforation was 1.0 mm², and the overall perforation area of all the perforations was 4 % of the overall surface area of the liner.

Next, an acrylic pressure-sensitive adhesive (trade name, Rheocoat 1020 by Toray Cortex) was applied on one surface of a polyethylene film (trade name, SHO by Ohkura Industry, having a thickness of 50 µm - this may be hereinafter referred to as "Substrate A2") to form thereon a pressure-sensitive adhesive layer having a dry thickness of 10 µm (this may be hereinafter referred to as "pressure-sensitive adhesive layer A2"), and the pressure-sensitive adhesive layer A2 was stuck to the perforated releasable liner A2. Next, using cotton fibers (thickness, 1.5 deniers; length, 1.0 mm), this was electrostatically flocked on the surface of the perforated releasable liner A2 thereof, whereby the cotton fibers were planted in the sites of the pressure-sensitive adhesive layer A2 corresponding to the perforations of the perforated releasable liner A2. As a result, the process gave a transfer sheet that has raised spots of fibers in the surface of the pressure-sensitive adhesive layer thereof (this may be hereinafter referred to as "sheet A2 for transfer formation of projected spots of fibers"), like in Example 1. Specifically, the sheet A2 for transfer formation of projected spots of fibers has a layer constitution of "substrate A2/pressure-sensitive adhesive layer A2 having raised spots of fibers on its surface/perforated releasable liner A2".

On the other hand, a heptane solution of 1 wt.% polydimethylsiloxane-type silicone release agent (trade name, TPR6600 by GE Toshiba Silicone) was applied onto polyethylene-laminated kraft paper to prepare a releasable liner (this may be hereinafter referred to as "releasable liner B2"). The release face of the releasable liner B2 was then coated with a rubber pressure-sensitive adhesive (this comprises natural rubber and styrene-butadiene rubber in a ratio of natural rubber/styrene-butadiene rubber = 50/50 by weight) to form thereon a pressure-sensitive adhesive layer having a dry thickness of 20 µm (this may be hereinafter referred to as "pressure-sensitive adhesive layer B2a"). A polyester nonwoven fabric (this may be hereinafter referred to as "substrate B2") was stuck to the surface of the pressure-sensitive adhesive layer B2a, and then the surface of the substrate B2 (polyester nonwoven fabric) was coated with a rubber pressure-sensitive adhesive (this comprises natural rubber and styrene-butadiene rubber in a ratio of natural rubber/styrene-butadiene rubber = 50/50 by weight) to form thereon a pressure-sensitive adhesive layer having a dry thickness of 20 µm (this may be hereinafter referred to as "pressure-sensitive adhesive layer B2b"). The process gave a double-sided pressure-sensitive adhesive sheet (this may be hereinafter referred to as "double-sided pressure-sensitive adhesive sheet B2"). Specifically, the double-sided pressure-sensitive adhesive sheet B2 has a layer constitution of "releasable liner B2/pressure-sensitive adhesive layer B2a/substrate B2/pressure-sensitive adhesive layer B2b".

The adhesive force of the pressure-sensitive adhesive layer B2b is larger than that of the pressure-sensitive adhesive layer A2. Concretely, the adhesive force of the pressure-sensitive adhesive layer B2b (23°C × 65 %RH, 180° peeling, peeling speed 300 mm/min) was 7 N/20 mm; while the adhesive force of the pressure-sensitive adhesive layer A2 (23°C × 65 %RH, 180° peeling, peeling speed 300 mm/min) was 3 N/20 mm. The adhesive forces of the pressure-sensitive adhesive layers were measured in the same manner as that for the pressure-sensitive adhesive layers B1b and A1 in Example 1.

Next, the sheet A2 for transfer formation of projected spots of fibers was stuck under pressure to the surface of the pressure-sensitive adhesive layer B2b of the double-sided pressure-sensitive adhesive sheet B2 with the perforated releasable liner A2 thereof inside, in the same manner as in Example 1. After thus stuck, the sheet A2 was peeled off from the double-sided pressure-sensitive adhesive sheet B2, also in the same manner as in Example 1. The raised spots of fibers were transferred onto the surface of the pressure-sensitive adhesive layer B2b of the double-sided pressure-sensitive adhesive sheet B2, and the process gave a raised fibers-having double-sided pressure-sensitive adhesive sheet (this may be hereinafter referred to as "raised fibers-having double-sided pressure-sensitive adhesive sheet B2"). Specifically, the raised fibers-having double-sided pressure-sensitive adhesive sheet B2 has a layer constitution of "releasable liner B2/pressure-sensitive adhesive layer B2a/substrate B2/raised fibers-having pressure-sensitive adhesive layer B2b". The raised fibers-having pressure-sensitive adhesive layer B2b of the raised fibers-having double-sided pressure-sensitive adhesive sheet B2 is protected with a laminate of which the layer constitution corresponds to that of the transfer sheet A2 not having the raised spots of fibers.

### EXAMPLE 3

A heptane solution of 1 wt.% polydimethylsiloxane-type silicone release agent (trade name, KS-778 by Shin-etsu Chemical) was applied to both surfaces of a polyester film (trade name, Lumirror #38 by Toray, having a thickness of 38 µm), and then dried at 120°C for 2 minutes to produce a releasable liner (releasable paper - this may be hereinafter referred to as "releasable liner A3"). In this releasable liner A3, the amount of the silicone release agent was 0.05 g/m².

Using the same perforator as in Example 1, of which, however, the projections and recesses are so designed that they may form perforations each having an area of 1.5 mm² at intervals of 20 mm, the releasable liner A3 was perforated to have a pattern of perforations like in Example 1. Thus processed, the releasable liner A3 may be hereinafter referred to as "perforated releasable liner A3". In the perforated releasable liner A3, the mean perforation area of each perforation was 1.5 mm², and the overall perforation area of all the perforations was 0.4 % of the overall surface area of the liner.

Next, an acrylic pressure-sensitive adhesive (trade name, Rheocoat 1020 by Toray Cortex) was applied on one surface of a polyethylene film (trade name, SHO by Ohkura Industry, having a thickness of 50 µm - this may be hereinafter referred to as "Substrate A3") to form thereon a pressure-sensitive adhesive layer having a dry thickness of 10 µm (this may be hereinafter referred to as "pressure-sensitive adhesive layer A3"), and the pressure-sensitive adhesive layer A3 was stuck to the perforated releasable liner A3. Next, using polyamide fibers (thickness, 1.5 deniers; length, 1.0 mm), this was electrostatically flocked on the surface of the perforated releasable liner A3 thereof, whereby the polyamide fibers were planted in the sites of the pressure-sensitive adhesive layer A3 corresponding to the perforations of the perforated releasable liner A3. As a result, the process gave a transfer sheet that has raised spots of fibers in the surface of the pressure-sensitive adhesive layer thereof (this may be hereinafter referred to as "sheet A3 for transfer formation of projected spots of fibers"), like in Example 1. Specifically, the sheet A3 for transfer formation of projected spots of fibers has a layer constitution of "substrate A3/pressure-sensitive adhesive layer A3 having raised spots of fibers on its surface/perforated releasable liner A3".

On the other hand, a heptane solution of 1 wt.% polydimethylsiloxane-type silicone release agent (trade name, TPR6600 by GE Toshiba Silicone) was applied onto polyethylene-laminated kraft paper to prepare a releasable liner (this may be hereinafter referred to as "releasable liner B3"). The release face of the releasable liner B3 was then coated with an acrylic pressure-sensitive adhesive (this comprises butyl acrylate-acrylic acid copolymer as the base polymer) to form thereon a pressure-sensitive adhesive layer having a dry thickness of 20 µm (this may be hereinafter referred to as "pressure-sensitive adhesive layer B3a"). A polyester nonwoven fabric (this may be hereinafter referred to as "substrate B3") was stuck to the surface of the pressure-sensitive adhesive layer B3a, and then the surface of the substrate B3 (polyester nonwoven fabric) was coated with an acrylic pressure-sensitive adhesive (this comprises butyl acrylate-acrylic acid copolymer as the base polymer) to form thereon a pressure-sensitive adhesive layer having a dry thickness of 20 µm (this may be hereinafter referred to as "pressure-sensitive adhesive layer B3b"). The process gave a double-sided pressure-sensitive adhesive sheet (this may be hereinafter referred to as "double-sided pressure-sensitive adhesive sheet B3"). Specifically, the double-sided pressure-sensitive adhesive sheet B3 has a layer constitution of "releasable liner B3/pressure-sensitive adhesive layer B3a/substrate B3/pressure-sensitive adhesive layer B3b".

The adhesive force of the pressure-sensitive adhesive layer B3b is larger than that of the pressure-sensitive adhesive layer A3. Concretely, the adhesive force of the pressure-sensitive adhesive layer B3b (23°C × 65 %RH, 180° peeling, peeling speed 300 mm/min) was 7 N/20 mm; while the adhesive force of the pressure-sensitive adhesive layer A3 (23°C × 65 %RH, 180° peeling, peeling speed 300 mm/min) was 3 N/20 mm. The adhesive forces of the pressure-sensitive adhesive layers were measured in the same manner as that for the pressure-sensitive adhesive layers B1b and A1 in Example 1.

Next, the sheet A3 for transfer formation of projected spots of fibers was stuck under pressure to the surface of the pressure-sensitive adhesive layer B3b of the double-sided pressure-sensitive adhesive sheet B3 with the perforated releasable liner A3 thereof inside, in the same manner as in Example 1. After thus stuck, the sheet A3 was peeled off from the double-sided pressure-sensitive adhesive sheet B3, also in the same manner as in Example 1. The raised spots of fibers were transferred onto the surface of the pressure-sensitive adhesive layer B3b of the double-sided pressure-sensitive adhesive sheet B3, and the process gave a raised fibers-having double-sided pressure-sensitive adhesive sheet (this may be hereinafter referred to as "raised fibers-having double-sided pressure-sensitive adhesive sheet B3"). Specifically, the raised fibers-having double-sided pressure-sensitive adhesive sheet B3 has a layer constitution of "releasable liner B3/pressure-sensitive adhesive layer B3a/substrate B3/raised fibers-having pressure-sensitive adhesive layer B3b". The raised fibers-having pressure-sensitive adhesive layer B3b of the double-sided pressure-sensitive adhesive sheet B3 is protected with a laminate of which the layer constitution corresponds to that of the transfer sheet A3 not having the raised spots of fibers.

### COMPARATIVE EXAMPLE 1

A double-sided pressure-sensitive adhesive sheet (this may be hereinafter referred to as "double-sided pressure-sensitive adhesive sheet B4") was produced in the same manner as in Example 1, for which, however, the releasable liner was neither perforated nor flocked. Accordingly, the double-sided pressure-sensitive adhesive sheet B4 has a layer constitution of "releasable liner B1/pressure-sensitive adhesive layer B1a/substrate B1/pressure-sensitive adhesive layer B1b". The pressure-sensitive adhesive layer B1b of the raised fibers-having double-sided pressure-sensitive adhesive sheet B4 is protected with a laminate having a layer constitution of "substrate A1/pressure-sensitive adhesive layer A1/releasable liner A1".

### (Evaluation)

The double-sided pressure-sensitive adhesive sheets obtained in Examples and Comparative Example (double-sided pressure-sensitive adhesive sheets B1 to B4) were temporarily stuck to an acrylic plate with a load of 25 g/22.5 cm² applied to the side of the releasable liner thereof. Concretely, the raised fibers-having pressure-sensitive adhesive layer (raised fibers-having pressure-sensitive adhesive layer B1b to B3b) of the sheets of Examples 1 to 3, and the pressure-sensitive adhesive layer not protected with the releasable liner (pressure-sensitive adhesive layer B1b) of the sheet of Comparative Example 1 was stuck to the acrylic plate. Then, the sheet was moved by 6 mm from its temporarily-adhered site, and then this was strongly pressed to the plate. The repositionability of the sheet was evaluated as to whether or not the sheet was easy to move.

After temporarily adhered, the sheet was left as it was for 24 hours at room temperature (23°C), and then its adhesive force to the acrylic plate was measured with a Tensilon tensile tester. Based on the ratio of the adhesive force of the sheet thus measured to that of the sheet of Comparative Example 1, the adhesive force of the pressure-sensitive adhesive layer that has raised spots of fibers in its surface was evaluated.

The test data are shown in the columns of "repositionability" and "adhesive force recovery (%)" in Table 1.

**Table 1**

| | Example | | | Comparative Example 1 |
|---|---|---|---|---|
| | 1 | 2 | 3 | |
| Repositionability | easy to move | easy to move | easy to move | Impossible to move |
| Adhesive Force Recovery (%) | 97 | 92 | 95 | 100 |

Table 1 confirms that the pressure-sensitive adhesive sheets of Examples (having raised spots of fibers in the surface of the pressure-sensitive adhesive layer) are easy to move after their temporary adhesion and, after strongly adhered to adherends, their adhesive force is high.

While the invention has been described in detail and with reference to specific embodiments thereof, it will be apparent to one skilled in the art that various changes and modifications can be made therein without departing from the spirit and scope thereof.

## Claims

1. A sheet for transfer formation of projected spots of fibers, which enables transfer formation of projected spots of fibers at least partly in the surface of a pressure-sensitive adhesive layer.

2. The sheet for transfer formation of projected spots of fibers as claimed in claim 1, wherein the projected spots of fibers are raised spots of fibers that are raised from the surface of a pressure-sensitive adhesive layer.

3. The sheet for transfer formation of projected spots of fibers as claimed in claim 1 or 2, which enables transfer formation of projected spots of fibers in the surface of a pressure-sensitive adhesive layer so as to make the surface have a predetermined pattern of spots as a whole thereof.

4. The sheet for transfer formation of projected spots of fibers as claimed in any of claims 1 to 3, wherein at least one surface of the sheet has a function as a release face relative to the pressure-sensitive adhesive layer that is to receive the projected spots of fibers from the sheet, and the sheet has the projected spots of fibers for transfer formation that are to be given to the surface of the pressure-sensitive adhesive layer through transfer formation, at least partly on the side of the release face of the sheet.

5. The sheet for transfer formation of projected spots of fibers as claimed in claim 4, which has recesses partly formed in the release face thereof, and has, in the recesses, projected spots of fibers for transfer formation.

6. The sheet for transfer formation of projected spots of fibers as claimed in claim 5, which has, in the bottom of each recess in the release face thereof, a pressure-sensitive adhesive layer for holding the projected spots of fibers for transfer formation and in which the adhesive force of the pressure-sensitive adhesive layer in the recess bottom is lower than that of the pressure-sensitive adhesive layer that is to receive the projected spots of fibers from the sheet through transfer formation.

7. The sheet for transfer formation of projected spots of fibers as claimed in claim 6, which comprises a substrate, a pressure-sensitive adhesive layer for holding the projected spots of fibers for transfer formation, and a holes-having releasable liner, and in which the projected spots of fibers for transfer formation are formed in the holes of the releasable liner and on the surface of the pressure-sensitive adhesive layer for holding the projected spots of fibers for transfer formation.

8. The sheet for transfer formation of projected spots of fibers as claimed in claim 6, which comprises a substrate having an uneven structure, a release-treated layer formed on the projections of the substrate, and a pressure-sensitive adhesive layer formed in the bottom of each recess of the substrate for holding the projected spots of fibers for transfer formation, and in which the projected spots of fibers for transfer formation are formed in the recesses of the substrate and on the surface of the pressure-sensitive adhesive layer for holding the projected spots of fibers for transfer formation.

9. The sheet for transfer formation of projected spots of fibers as claimed in any of claims 4 to 8, which is wound up into a roll with its release face inside.

10. The sheet for transfer formation of projected spots of fibers as claimed in any of claims 1 to 9, wherein the pressure-sensitive adhesive layer to receive the projected spots of fibers is a pressure-sensitive adhesive layer formed on at least one surface of the support of a pressure-sensitive adhesive tape or sheet.

11. The sheet for transfer formation of projected spots of fibers as claimed in claim 10, wherein the pressure-sensitive adhesive tape or sheet that has a pressure-sensitive adhesive layer to receive the projected spots of fibers is a double-sided pressure-sensitive adhesive tape or sheet and at least one pressure-sensitive adhesive surface thereof may receive the projected spots of fibers.

12. The sheet for transfer formation of projected spots of fibers as claimed in any of claims 1 to 11, wherein the pressure-sensitive adhesive layer to receive the projected spots of fibers is formed of at least one pressure-sensitive adhesive selected from rubber pressure-sensitive adhesives, acrylic pressure-sensitive adhesives, and hot-melt pressure-sensitive adhesives.

13. A method for producing a pressure-sensitive adhesive tape or sheet, which comprises sticking the sheet for transfer formation of projected spots of fibers of any of claims 4 to 12, to the surface of the pressure-sensitive adhesive layer of a pressure-sensitive adhesive tape or sheet, and then peeling the sheet from it to thereby transfer and form the projected spots of fibers at least partly in the surface of the pressure-sensitive adhesive layer.
